# EUROPÄISCHE PATENTSCHRIFT

(11) **EP 3 115 233 B1**
(45) Veröffentlichungstag und Bekanntmachung des Hinweises auf die Patenterteilung: **26.02.2020**
(21) Anmeldenummer: 16175061.7
(22) Anmeldetag: 17.06.2016
(51) Int. Cl.: B60D 1/54, B60D 1/48, B60D 1/06

(54) **ANHÄNGEKUPPLUNG MIT EINER TRÄGERANORDNUNG**
DRAWBAR WITH A SUPPORT ASSEMBLY
ATTELAGE DOTÉ D'UN SYSTÈME SUPPORT

(30) Priorität: 17.06.2015 DE 102015109719; 30.09.2015 DE 102015116631
(43) Veröffentlichungstag der Anmeldung: 11.01.2017
(73) Patentinhaber: WESTFALIA - Automotive GmbH, 33378 Rheda-Wiedenbrück (DE)
(72) Erfinder: Angermann, Kay, 04720 Döbeln (DE); Kuhlen, Arne, 59320 Ennigerloh (DE)
(74) Vertreter: Patentanwälte Bregenzer und Reule Partnerschaftsgesellschaft mbB

(56) Entgegenhaltungen:
- EP-A1- 0 069 231
- EP-A1- 1 466 787
- EP-A1- 2 607 113
- DE-A1-102007 032 932
- US-A1- 2003 160 430

## Beschreibung

Die Erfindung betrifft eine für ein Kraftfahrzeug vorgesehene Anhängekupplung gemäß dem Oberbegriff des Anspruchs 1.

Eine derartige Anhängekupplung ist beispielsweise in DE 10 2007 032 932 A1 beschrieben.

Es ist an sich bekannt, den Halter für den Kupplungsarm, an dem beispielsweise eine Kupplungskugel zum Anhängen eines Anhängers angeordnet ist, anhand beispielsweise einer Verschraubung mit dem Querträger formschlüssig zu verbinden.

Allerdings ist eine derartige Verbindung stets aufwendig herzustellen. Insbesondere sind entsprechende Montageschritte notwendig, was die Fertigung teuer macht.

Es ist daher die Aufgabe der vorliegenden Erfindung, eine Anhängekupplung mit Trägeranordnung und Halter zu verbessern.

Zur Lösung dieser Aufgabe wird eine Anhängekupplung gemäß der technischen Lehre des Anspruchs 1 vorgeschlagen.

Ein erfindungsgemäßes Verfahren zur Herstellung einer Anhängekupplung der eingangs genannten Art sieht vor:
- Anbringen eines Aufnahmeteils des Halters an einem Rohling des Querträgers, so dass der Querträger in einer Querträgeraufnahme des Aufnahmeteils aufgenommen ist, wobei die Querträgeraufnahme zumindest einen Teil der Durchtrittsöffnung bereitstellt,
- Verschließen der Querträgeraufnahme des Aufnahmeteils durch ein Schließteil, sodass die Durchtrittsöffnung für den Querträger ganz oder zumindest teilweise verschlossen ist und
- Umformen des Querträgers im Bereich des Halters zur Fixierung des Halters am Querträger.

Der erfindungsgemäße Ansatz ist es dabei, dass der Halter sozusagen zweiteilig ist, nämlich ein Aufnahmeteil und ein Schließteil hat, so dass er an dem Rohling des Querträgers, beispielsweise einem noch unverformten Profilrohr oder Rohling, leicht montierbar ist.

Die Querträgeraufnahme des Halters weist zweckmäßigerweise eine Einstecköffnung auf, so dass der Querträger quer zu seiner Längserstreckung oder Länge in die Einstecköffnung in einer Einsteckrichtung einsteckbar ist. Das Schließteil dient zum vollständigen oder zumindest teilweisen Verschließen der Einstecköffnung oder der Querträgeraufnahme, sodass der Querträger oder dessen Rohling quer zu der Einsteckrichtung aus der Durchtrittsöffnung nicht mehr heraus gelangen kann. Somit bildet die Durchtrittsöffnung des Halters sozusagen eine Form oder ein Gegenstück für eine Form für den anschließenden Umformungsschritt, bei dem zumindest eine Formschlusskontur des Querträgers zum formschlüssigen Halten des Halters ausgebildet wird.

Anhand der Umformung hat der Querträger im Bereich des Halters mindestens eine Formschlusskontur, die formschlüssig am Halter anliegt. Der Querträger selbst trägt also zum Fixieren des Halters an ihm bei. Zudem wird das Schließteil durch die Umformung am Aufnahmeteil zuverlässig gehalten, sodass eine weitere Verschraubung oder dergleichen andere Montage des Schließteils am Aufnahmeteil nicht notwendig ist. Beispielsweise ist das Schließteil am Aufnahmeteil durch die Umformung verspannt.

Der Kupplungsarm ist mit seinem einen Ende mit dem Halter verbunden oder lösbar verbindbar und hat an seinem anderen Ende Kuppelmittel für einen Anhänger oder einen Lastenträger, z.B. einen Kuppelkörper, insbesondere eine Kupplungskugel, eine Steckaufnahme oder einen Steckvorsprung oder dergleichen.

Der Kupplungsarm ist z.B. mit dem Halter verschraubt, verschweißt oder einstückig. Der Kupplungsarm kann am Halter lösbar anordenbar sein, z.B. mit einem Steckvorsprung in eine Steckaufnahme des Halters einsteckbar sein. Es ist auch möglich, dass der Kupplungsarm am Halter anhand eines Lagers beweglich zwischen einer für den Gebrauch, z.B. zum Halten des Anhängers oder Lastenträgers, vorgesehenen Gebrauchsstellung und einer Nichtgebrauchsstellung, z.B. um eine oder mehrere Achsen schwenkbar und/oder verschieblich, gelagert ist. In der Gebrauchsstellung steht der Kupplungsarm nach hinten vor das Kraftfahrzeug vor. In der Nichtgebrauchsstellung ist er z.B. hinter einem Stoßfänger verborgen.

Der Querträger ist z.B. mit Stützen oder winkelig abstehenden Seitenträgern mit dem Kraftfahrzeug verbunden oder verbindbar.

Der Querträger kann einteilig sein oder aus mindestens zwei Segmenten bestehen.

Der Rohling oder der Querträger ist z.B. ein Profilrohr oder rohrformig oder als ein Rohr ausgestaltet. Insbesondere begrenzt der Rohling oder der Querträger einen Hohlraum. Der Rohling oder der Querträger kann einen geschlossenen Querschnitt haben. Es ist auch möglich, dass der Rohling oder der Querträger einen seitlich offenen Querschnitt, z.B. einen U-förmigen Querschnitt haben.

Die Umformung kann beim Querträger von innen her erfolgen, d.h. dass beispielsweise eine Innenumformung, insbesondere eine Innenhochdruckumformung, stattfindet. Somit wird der Querträger im Bereich des Halters abschnittsweise umgeformt, beispielsweise aufgebläht, sodass er formschlüssig an dem Halter anliegt. Besonders bevorzugt ist ein sogenanntes Hydroforming, das heißt eine Hochdruckumformung mittels Wasser oder anhand eines sonstigen Fluids.

Ohne weiteres ist aber auch eine Hochdruckumformung oder sonstige Umformung am Außenumfang des Querträgers möglich, um den Formschluss mit dem Halter herzustellen.

Zweckmäßig ist es, wenn das Schließteil die Durchtrittsöffnung vollständig verschließt, das heißt dass der gesamte Außenumfang des Querträgers im Bereich des Halters von dem Halter umschlossen ist.

Es ist aber auch möglich, dass das Aufnahmeteil und das Schließteil nur einen Teilumfang des Querträgers im Bereich des Halters umschließen, so dass beispielsweise in Umfangsrichtung der Durchtrittsöffnung oder des Querträgers ein Schlitz oder eine sonstige Öffnung frei bleibt. Beispielsweise kann die Durchtrittsöffnung im Querschnitt im wesentlichen U-förmig sein, wobei an den freien Endbereichen der Schenkel dieser U-förmigen Durchtrittsöffnung oder zumindest einem der freien Endbereich eines der Schenkel dieser U-förmigen Durchtrittsöffnung ein zu dem anderen Schenkel hin vorstehender oder geneigter Vorsprung oder Vorsprungschenkel vorgesehen ist.

Insgesamt ist jedoch die Querträgeraufnahme durch das Schließteil insoweit verschlossen oder in einem solchen Umfang verschlossen, dass der Halter quer zu einer Einsteckrichtung, entlang derer das Aufnahmeteil am Querträger ansteckbar ist, nicht von dem Querträger entfernbar ist.

Eine vorteilhafte Ausführungsform der Erfindung sieht vor, dass der Halter mindestens eine Verschiebesicherungskontur aufweist, an der eine durch die Umformung gebildete Formschlusskontur des Querträgers formschlüssig anliegt und/oder an die der Querträger durch die Umformung angepasst ist. Weiterhin ist auch eine Verdrehsicherungskontur beim Halter vorteilhaft vorhanden, an der eine durch die Umformung gebildete Formschlusskontur des Querträgers formschlüssig anliegt und/oder an die der Querträger durch die Umformung angepasst ist.

Eine derartige Verschiebesicherungskontur oder Verdrehsicherungskontur oder beides kann dazu dienen, dass das Schließteil am Aufnahmeteil fixiert ist. Wenn also beispielsweise das Aufnahmeteil durch eine Formschlusskontur des Querträgers an sich schon unverschieblich und verdrehsicher am Querträger befestigt ist, bewirkt eine entsprechende Verschiebesicherungskontur oder Verdrehsicherungskontur oder beides am Schließteil, dass sich das Schließteil nicht mehr vom Aufnahmeteil entfernen kann.

Insgesamt wird durch die Verschiebesicherungskontur und/oder die Verdrehsicherungskontur vorteilhaft bewirkt, dass der Halter unverschieblich, beispielsweise unverschieblich bezüglich der Längsachse des Querträgers und/oder unverdrehbar bezüglich einer Längsachse des Querträgers am Querträger angeordnet ist.

Die Verschiebesicherungskontur oder die Verdrehsicherungskontur oder beide umfasst beispielsweise mindestens eine Querkontur, zum Beispiel eine Queraußenseite des Halters oder eine Seitenkontur des Halters, insbesondere des Schließteils desselben, die quer zu der Längsrichtung des Querträgers verläuft. Somit liegt also beispielsweise ein Wulst oder ein sonstiger Vorsprung als Formschlusskontur des Querträgers an der Queraußenseite oder der Querkontur des Aufnahmeteils oder des Schließteils oder beiden an. Bevorzugt ist es dabei, wenn an einander entgegengesetzten Queraußenseiten des Halters oder Querkonturen des Halters oder des Schließteils, entsprechend seitlich innen Formschlusskonturen des Querträgers, die durch die Umformung gebildet sind, anliegen, so dass der Halter bezüglich des Querträgers oder bezüglich einer Längsrichtung des Querträgers verschiebefest am Querträger gehalten ist.

Bevorzugt ist am Schließteil mindestens eine Anlagefläche quer zu seiner Steckrichtung, in welcher dieses zweckmäßigerweise in Eingriff mit dem Aufnahmeteil gebracht werden kann, vorgesehen. Die Anlagefläche bildet eine Widerlagerfläche oder Stützkontur für eine Formschlusskontur des Querträgers, die durch Umformung des Querträgers gebildet ist. Wenn diese Formschlusskontur oder Stützkontur an der Anlagefläche anliegt, ist das Schließteil unverschieblich und/oder unverdrehbar relativ zum Querträger und somit unverschieblich oder unverdrehbar relativ zum Aufnahmeteil, das ebenfalls am Querträger gehalten ist.

Weiterhin umfasst die Verschiebesicherungskontur oder Verdrehsicherungskontur oder beide einen Vorsprung oder eine Vertiefung an einem Innenumfang der Durchtrittsöffnung. Beispielsweise ist am Innenumfang der Durchtrittsöffnung eine Nut oder ein Längsvorsprung oder eine Längsrippe vorgesehen. Die Längsrippe steht sozusagen in Richtung des Querträgers vor, der eine mit der Längsrippe korrespondierende, eine Formschlusskontur bildende Ausnehmung oder Vertiefung aufweist. In die Nut am Innenumfang der Durchtrittsöffnung dringt die Formschlusskontur des Querträgers ein oder steht die Formschlusskontur des Querträgers vor. Die Nut am Innenumfang der Durchtrittsöffnung wird beispielsweise von der Formschlusskontur des Querträgers ausgefüllt. Beispielsweise ist die Nut im Querschnitt U-förmig.

Der Vorsprung oder die Vertiefung ist beispielsweise am Schließteil angeordnet, sodass dieses sich relativ zum Aufnahmeteil nicht mehr bewegen kann, wenn eine durch die Umformung des Querträgers gebildete Formschlusskontur in Eingriff mit dem Vorsprung oder der Vertiefung des Schließteils ist.

Besonders bevorzugt ist es, wenn am Halter, beispielsweise am Aufnahmeteil und/oder am Schließteil, eine Aussparung, insbesondere eine Bohrung oder sonstige Durchtrittsöffnung vorhanden ist, in die der Querträger verformt ist. Durch die Bohrung oder sonstige Aussparung, die beispielsweise auch durch Laserschneiden, Stanzen oder dergleichen hergestellt sein kann, ist eine Verschiebesicherungskontur oder eine Verdrehsicherungskontur oder beides bereitgestellt. Beispielsweise hat das Schließteil ein Loch, in das hinein der Querträger mit seiner Formschlusskontur durch die Umformung verformt ist. Der in dieses Loch eingreifende Abschnitt des Querträgers verhindert, dass sich das Schließteil relativ zum Querträger und somit relativ zum ebenfalls am Querträger gehaltenen Aufnahmeteil bewegen kann.

Vorteilhaft kann auch vorgesehen sein, dass mindestens ein Bolzen oder ein sonstiges Befestigungselement, beispielsweise ein Niet, eine Mutter oder dergleichen, zur Befestigung eines Anbauteils, beispielsweise eines Haltekörpers für den Kupplungsarm, als eine Verschiebesicherungskontur und/oder Verdrehsicherungskontur vorgesehen ist. Beispielsweise steht ein Kopf des Bolzens oder des sonstigen Befestigungselements in den Innenumfang der Durchtrittsöffnung vor.

Als Verdrehsicherungskontur eignet sich beispielsweise eine geometrische Ausgestaltung einer Innenkontur der Durchtrittsöffnung des Halters, gegenüber der der Haltebereich des Querträgers unverdrehbar ist. Die Außenkontur des Querträgers, jedenfalls des Haltebereichs des Querträgers, ist an die Innenkontur der Durchtrittsöffnung formschlüssig angepasst, liegt also zumindest teilweise formschlüssig an der Innenkontur an. Dadurch ist die Verdrehsicherung gewährleistet. Bevorzugt hat die Innenkontur beispielsweise eine Unrundheit und/oder ist polygonal oder dergleichen. Jedenfalls kann sich der Querträger relativ zum Halter oder der Halter relativ zum Querträger aufgrund der geometrischen Ausgestaltung der Innenkontur der Durchtrittsöffnung bei dieser Ausgestaltung nicht verdrehen.

Vorteilhaft sind das Schließteil und das Aufnahmeteil anhand mindestens eines Widerlagers am Aufnahmeteil miteinander verbunden, an dem sich das Schließteil quer zu einer Einsteckrichtung des Querträgers in die Querträgeraufnahme abstützt. Wenn also der Querträger entgegen der Einsteckrichtung eine Kraft auf das Schließteil ausübt, stützt sich das Schließteil an dem Widerlager oder den Widerlagern ab.

Das mindestens eine Widerlager umfasst beispielsweise eine Verzahnung, einen Zapfenvorsprung, eine Zapfenaufnahme, einen Hakenvorsprung oder eine Hakenaufnahme. Beispielsweise ist es möglich, dass sich das Schließteil in der Art eines Puzzleteils oder einer puzzleartigen Formschlusskontur an dem Aufnahmeteil abstützt.

Ferner ist es vorteilhaft, wenn das Schließteil mit einem Steckabschnitt in eine Einstecköffnung eingreift, die ein Widerlager des Aufnahmeteils darstellt. Eine Steckrichtung des Steckabschnitts bzw. der Einstecköffnung ist vorzugsweise quer, z.B. rechtwinkelig quer, zur Einsteckrichtung, in der der Querträger oder dessen Rohling in die Querträgeraufnahme des Aufnahmeteils einzustecken ist.

Vorteilhaft ist es, wenn an die Querträgeraufnahme seitlich begrenzenden, beispielsweise einander gegenüberliegenden, Seitenschenkeln des Aufnahmeteils jeweils mindestens ein Widerlager vorgesehen ist, an dem sich das Schließteil abstützt. Beispielsweise sind an diesen einander gegenüberliegenden Seitenschenkeln jeweils Einstecköffnungen oder Durchstecköffnungen vorgesehen, in die das Schließteil mit einem jeweiligen Steckabschnitt eingesteckt oder durch die der Steckabschnitt durchgesteckt ist.

Vorzugsweise ist das Schließteil in der Art eines Schiebers ausgestaltet, der mindestens eine Durchstecköffnung an einem Seitenschenkel des Aufnahmeteils durchdringt und in eine Einstecköffnung oder Durchstecköffnung an diesem Seitenschenkel gegenüberliegenden Seitenschenkeln des Aufnahmeteils eindringt oder die Durchstecköffnung durchdringt. Bevorzugt hat dieser Schieber mindestens einen Vorsprung, der quer zu seiner Steckachse, entlang derer er in die Durchstecköffnung eingesteckt wird, vor einen Grundkörper des Schiebers vorsteht, so dass sich dieser Vorsprung am Seitenschenkel des Aufnahmeteils oder einem sonstigen Bestandteil des Aufnahmeteils abstützen kann.

Es ist auch möglich, dass an den einander gegenüberliegenden Seitenschenkeln des Aufnahmeteils beispielsweise eine Verzahnung, eine puzzleartige Kontur oder dergleichen zum Eingriff einer dazu passenden Gegenkontur des Schließteils vorgesehen ist.

Die Querträgeraufnahme des Aufnahmeteils ist zweckmäßigerweise im Querschnitt U-förmig oder V-förmig.

Eine derartige Querträgeraufnahme begrenzende Seitenschenkel können jeweils eines der vorgenannten Widerlager für das Schließteil aufweisen.

Auch das Schließteil kann im Querschnitt U-förmig oder V-förmig sein.

Das Schließteil kann plattenförmig sein. Das Schließteil kann in der Art eines Riegels ausgestaltet sein.

Vorzugsweise ist vorgesehen, dass die Querträgeraufnahme und das Schließteil den Querträger klammerartig aufnehmen.

Vorteilhaft ist vorgesehen, dass das Aufnahmeteil und das Schließteil anhand mindestens einer Verzahnung formschlüssig miteinander verbunden sind. Beispielsweise sind an Seitenschenkeln der Querträgeraufnahme oder an mindestens einem Seitenschenkel der Querträgeraufnahme ein Zahnvorsprung oder eine Zahnaufnahme oder beides vorgesehen, die zum formschlüssigen Halten einer Zahnaufnahme oder eines Zahnvorsprungs des Schließteils dienen.

Eine Längserstreckungsrichtung oder Steckrichtung dieser Verzahnung verläuft vorzugsweise nicht rechtwinkelig schräg zu einer Einsteckrichtung, in der oder entlang der der Querträger oder dessen Rohling in die Querträgeraufnahme des Halters einzustecken ist. Der Vorteil dieser Konstruktion ist es, dass der Querträger, wenn er sich quer zu seiner Einsteckrichtung aus der Querträgeraufnahme heraus bewegen will, dafür sorgt, dass sich die Verzahnung nicht löst, sondern sich sogar in besonderem Maße aneinander abstützt. Beispielsweise haben Zähne und Zahnaufnahmen der Verzahnung einen Schrägverlauf, der nicht parallel zur Einsteckrichtung des Querträgers beim Einstecken in die Querträgeraufnahme des Halters und/oder auch nicht rechtwinkelig und schräg zur Längsachse des Querträgers ist.

Vorteilhaft ist es, wenn das Schließteil und das Aufnahmeteil anhand mindestens einer zu dem Halt durch die Umformung des Querträgers zusätzliche Maßnahme mit einander verbunden sind oder aneinander gesichert sind. Diese zusätzliche Maßnahme kann vor der Umformung des Querträgers oder nach der Umformung des Querträgers erfolgen. Beispielsweise können das Schließteil und das Aufnahmeteil miteinander verklebt oder verschraubt sein. Besonders bevorzugt ist eine Umformung von Schließteil oder Aufnahmeteil oder beiden, um einen besonders sicheren Halt aneinander und/oder am Querträger zu gewährleisten. Eine besonders zweckmäßige Ausführungsform sieht vor, dass das Aufnahmeteil und das Schließteil miteinander verprägt werden. Beispielsweise wird ein Stempel in den Verbindungsbereich zwischen Schließteil und Aufnahmeteil gedrückt, der die beiden Teile miteinander formschlüssig verbindet bzw. zu einer partiellen Umformung führt.

Im Rahmen der Erfindung ist es besonders einfach möglich, dass die Trägeranordnung mindestens einen integral oder einstückig mit dem Querträger verbundenen Seitenträger umfasst. Vorzugsweise sind mindestens zwei Seitenträger integral oder einstückig mit dem Querträger verbunden. Beispielsweise ist es möglich, dass der Seitenträger oder die Seitenträger vor der Anordnung des Halters bereits hergestellt sind, beispielsweise durch eine Umformung eines Rohlings für den Querträger. An den bereits umgeformten Rohling kann das Aufnahmeteil des Halters leicht angesteckt und anschließend mit dem Schließteil zumindest teilweise verschlossen werden.

Es ist aber auch möglich, dass die Seitenträger erst dann durch Umformung ausgebildet oder am Querträger befestigt werden, wenn der Halter bereits am Rohling oder Querträger befestigt ist.

Eine bevorzugte Ausführungsform der Erfindung, die auch eine eigenständige Erfindung darstellen kann, sieht vor, dass bei einer Anhängekupplung der eingangs genannten Art an mindestens einem Längsendbereich, insbesondere an einander entgegengesetzten Längsendbereichen, des Querträgers oder mindestens einem Übergangsbereich des Querträgers zu Seitenträgern der Trägeranordnung mindestens ein Stützelement für einen Stoßfänger des Kraftfahrzeugs und/oder als Aufpralldämpfer vorgesehen ist. Das mindestens eine Stützelement verlängert den Querträger sozusagen nach quer außen, sodass er dort als Aufpralldämpfer oder als Stütze für einen Stoßfänger des Kraftfahrzeugs dient.

Das mindestens eine Stützelement ist ein Zusatzbauteil, das an der Trägeranordnung anhand von Befestigungsmitteln befestigt ist. Die Stützelemente oder das Stützelement sind beispielsweise durch eine Vernietung, Verschraubung, Verklebung oder dergleichen mit dem Querträger und/oder einem Seitenträger verbunden. Besonders bevorzugt ist es, dass das mindestens eine Stützelement mit der Trägeranordnung anhand beispielsweise einer Verrastung befestigt ist. Beispielsweise können Rastvorsprünge des Stützelements in entsprechende Rastaufnahmen der Trägeranordnung, beispielsweise des Querträgers, eingreifen. Somit kann das Stützelement leicht ausgewechselt werden, beispielsweise nach einem Unfall.

Besonders vorteilhaft ist die Ausführungsform mit den Stützelementen dann, wenn der Querträger integral angeformte Seitenträger aufweist oder die Seitenträger und der Querträger aus ein und demselben Rohling durch Umformung hergestellt sind. Die Stützelemente oder das Stützelement steht z.B. über den Übergangsbereich des Querträgers zu den Seitenträgern nach quer außen vor den Querträger vor.

Das mindestens eine Stützelement hat beispielsweise eine Aufnahme, insbesondere eine U-förmige Aufnahme, eine V-förmige Aufnahme oder dergleichen, für die Trägeranordnung oder ein Profil der Trägeranordnung. Beispielsweise ist der Querträger in dieser Aufnahme aufgenommen. Die Aufnahme weist beispielsweise einen Boden sowie Seitenschenkel auf. Das Profilteil oder sonstige Bauteil der Trägeranordnung liegt am Boden dieser Aufnahme an.

Mindestens ein Seitenschenkel des Stützelements liegt vorteilhaft an einer Seitenwand eines Profils der Trägeranordnung, beispielsweise dem Querträger und/oder einem Seitenträger, an. Die Aufnahme kann also auch beispielsweise nur L-förmig sein, sodass nur ein einziger Seitenschenkel am Profilteil anliegt. Besonders bevorzugt ist jedoch, dass das Stützelement zwei Seitenschenkel aufweist, zwischen denen das Profilteil der Trägeranordnung, beispielsweise der Querträger, sandwichartig gehalten ist.

Weiterhin ist es vorteilhaft vorgesehen, dass das Stützelement anhand einer Verschraubung und/oder Vernietung und/oder Verrastung und/der Verschweißung oder dergleichen mit der Trägeranordnung, beispielsweise dem Querträger, einem Seitenträger oder dergleichen, verbunden ist. Mithin ist also das Stützelement ein Zusatzbauteil, das an der Trägeranordnung befestigt ist.

Das Stützelement weist zweckmäßigerweise einen frei vor den Querträger vorstehenden Stützschenkel auf. Beispielsweise ist das Stützelement mit einem Abschnitt am Querträger abgestützt, während der Stützschenkel nach außen, zu den Querseiten des Kraftfahrzeugs hin oder über die Längsenden des Querträgers hinaus, vor den Querträger vorsteht.

Vorteilhaft ist vorgesehen, dass das Stützelement mindestens ein Dämpferteil oder Stützteil für einen Stoßfänger des Kraftfahrzeugs trägt oder abstützt. Das Stützteil oder das Dämpferteil ist also zwischen dem Stützelement und dem Stoßfänger angeordnet. Somit kann sich der Stoßfänger bei einem Aufprall zweckmäßigerweise über das Dämpferteil oder Stützteil an dem Stützelement abstützen. Das Crashverhalten des Kraftfahrzeugs wird dadurch verbessert.

Das Stützelement oder auch das am Stützelement angeordnete Stützteil oder Dämpferteil kann beispielsweise eine Schaumstoffkomponente enthalten oder aus Schaumstoff bestehen. Weiterhin ist eine Verstärkung anhand einer Verrippung, einer Wabenstruktur oder dergleichen beim Stützteil, Stützelement oder Dämpferteil vorteilhaft.

Es wird deutlich, dass das Stützteil integral ein Dämpferteil enthalten kann.

Es ist möglich, dass ein Stützelement integral eine Dämpfungsstruktur aufweist, also die Funktion eines Dämpferteils leistet. Die Dämpfungsstruktur kann beispielsweise eine Verrippung aufweisen oder aus Schaumstoff bestehen.

Weiterhin ist es möglich, dass das Stützelement, beispielsweise das Stützteil oder das Dämpferteil oder beide, Partien unterschiedlicher Festigkeit aufweisen. Beispielsweise ist es möglich, dass das Stützelement, zum Beispiel das Stützteil und/oder das Dämpferteil, im Bereich eines Stützschenkels weniger nachgiebig als im Bereich eines Befestigungsabschnitts ist, wo es mit der Trägeranordnung verbunden ist. Es ist aber auch umgekehrt möglich, dass das Stützelement, insbesondere das Dämpferteil oder Stützteil oder beide, gerade im Bereich des Stützschenkels, der seitlich vor einen Querträger der Trägeranordnung vorsteht, besonders nachgiebig ist, während näher beim Querträger festere Zonen vorgesehen sind. Die unterschiedliche Nachgiebigkeit lässt sich beispielsweise durch unterschiedliche Qualitäten einer Verrippung, beispielsweise steifere und/oder enger beieinander stehende oder weiter voneinander entfernte Rippen erzielen.

Eine vorteilhafte Ausgestaltung eines erfindungsgemäßen Stützelements sieht vor, dass dieses zumindest partiell an eine Außenumfangskontur der Trägeranordnung angepasst ist. Vorzugsweise stützt sich das Stützelement zumindest abschnittsweise formschlüssig oder flächig oder beides an der Trägeranordnung, beispielsweise einem Profilelement derselben, ab.

Weiterhin ist es vorteilhaft, wenn auch das Stützteil oder Dämpferteil zumindest partiell zur formschlüssigen Abstützung an dem Stützelement ausgestaltet ist. Beispielsweise hat das Stützteil oder Dämpferteil eine Aufnahme, in die das Stützelement eingreift.

Das Stützelement ist zweckmäßigerweise an der Trägeranordnung anhand einer Rastverbindung befestigbar. Auch für das Stützteil oder Dämpferteil ist es vorteilhaft, wenn es am Stützelement anhand einer Verrastung befestigbar ist. Die Verrastung sieht beispielsweise Rastvorsprünge oder Rastnasen einerseits und korrespondierende Rastaufnahmen andererseits vor.

Weiterhin können zur Befestigung des Stützelements an der Trägeranordnung und/oder des Stützteils oder Dämpferteils am Stützelement Hakenaufnahmen, Hakenvorsprünge, Steckvorsprünge, Steckaufnahmen oder dergleichen vorgesehen sein.

Der Querträger oder dessen Rohling bestehen zweckmäßigerweise aus Metall, insbesondere aus Stahl. Bei den Stützelementen oder dem Stützelement ist es vorteilhaft, wenn dieses ebenfalls aus Metall, gegebenenfalls aber auch aus Kunststoff besteht. Insbesondere kann das Stützelement aus einem Kunststoffteil bestehen oder Kunststoff enthalten. Insbesondere bei dem am Stützelement angeordneten Stützteil oder Dämpferteil ist es vorteilhaft, wenn dieses aus Kunststoff besteht oder Kunststoff enthält. Beispielsweise kann eine Komponente aus Schaumstoff optimal nachgiebig und andererseits ausreichend steif sein, so dass sie mit Vorteil das Stützelement, Stützteil oder Dämpferteil bildet oder eine daran angeordnete, beispielsweise angespritzte, angeklebte oder dergleichen anderweitig befestigte, Komponente darstellt.

Zweckmäßigerweise haben die Trägeranordnung und/oder das Stützelement Verstärkungskonturen, beispielsweise Rippen, eine Gitterstruktur oder dergleichen.

Eine ebenfalls an sich eine eigenständige Erfindung darstellende Ausführungsform sieht vor, die auch eine Ausgestaltung der eingangs genannten oder erfindungsgemäßen Anhängekupplung darstellen kann, sieht zweckmäßigerweise vor, dass die Trägeranordnung zumindest partiell eine an das Kraftfahrzeug angepasste Außenumfangskontur aufweist. Beispielsweise sind Verjüngungen, Taillierungen oder dergleichen vorgesehen, die es ermöglichen, die Trägeranordnung in einem Aufnahmeraum zwischen beispielsweise der Karosserie und dem Stoßfänger oder einer Stoßfängerabdeckung des Kraftfahrzeugs unterzubringen. Die Trägeranordnung ist z.B. an Engstellen angepasst.

Besonders bevorzugt ist eine derartige Querschnittsanpassung oder Anpassung der Umfangskontur im Bereich von Seitenträgern.

Eine an sich ebenfalls eine eigenständige Erfindung darstellende Ausführungsform der Erfindung sieht weiterhin vor, dass die Trägeranordnung Seitenträger aufweist, insbesondere integral mit dem Querträger verbundene Seitenträger. Im Bereich ihrer freien Enden haben die Seitenträger eine an das Kraftfahrzeug angepasste Außenumfangskontur, beispielsweise eine Verjüngung. Insbesondere haben die Seitenträger Steckenden, die in eine entsprechende Steckaufnahme am Kraftfahrzeug einsteckbar sind.

Vorteilhaft ist vorgesehen, dass der Halter mindestens einen Bolzen umfasst, der in einer Steckachsrichtung in eine Durchtrittsöffnung des Halters eingesteckt ist und mit einem Bolzenkopf an dem Halter neben der Durchtrittsöffnung abgestützt ist. Es ist dabei zweckmäßig, dass ein Bolzenschaft des mindestens einen Bolzens zur Befestigung eines Anbauteils, insbesondere eines Haltekörpers für den Kupplungsarm, in der Steckachsrichtung vor den Halter vorsteht und der Bolzenkopf durch eine Umformungspartie entgegen der Steckachsrichtung abgestützt ist und/oder der mindestens eine Bolzen anhand mindestens einer Verdrehsicherungskontur an der Durchtrittsöffnung verdrehsicher gehalten ist. Der Bolzen oder Bolzenkopf bildet zweckmäßigerweise eine Verschiebesicherung oder Verdrehsicherung des Halters gegenüber dem Querträger.

Bei dem Verfahren zur Herstellung der Anhängekupplung, insbesondere der Trägeranordnung, ist es vorteilhaft, dass der Rohling des Querträgers vor dem Anbringen des Halters derart umgeformt ist, dass er mindestens einen Krümmungsabschnitt aufweist, der durch die von dem Aufnahmeteil und dem Schließteil begrenzte Durchtrittsöffnung oder Durchstecköffnung nicht durchsteckbar ist. Beispielsweise steht mindestens ein Seitenträger winkelig von dem Querträger ab. Der Halter kann über einen Krümmungsbereich oder Krümmungsabschnitt zwischen Seitenträger und Querträger nicht geschoben werden, wenn das Aufnahmeteil und das Schließteil miteinander verbunden sind. Vielmehr wird der Rohling sozusagen zunächst umgeformt, anschließend der Halter befestigt, indem das Aufnahmeteil quer zur Längserstreckung des Querträgers auf den Querträger aufgesteckt wird und anschließend anhand des Schließteils verschlossen wird. Diese besonders einfache Montage würde bei einem einstückigen Halter mit geschlossener Durchtrittsöffnung oder Durchstecköffnung nicht funktionieren.

Nachfolgend werden Ausführungsbeispiele der Erfindung anhand der Zeichnung erläutert. Es zeigen:
- Figur 1: eine perspektivische Schrägansicht einer erfindungsgemäßen Anhängekupplung von schräg oben
- Figur 2: die Anhängekupplung gemäß Figur 1, jedoch ohne Kupplungsarm und ohne Dämpferteile,
- Figur 3: die Anhängekupplung gemäß Figuren 1, 2 während der Herstellung, wobei ein Rohling einer Trägeranordnung sowie ein Halter gezeigt sind,
- Figur 4: die Anhängekupplung gemäß vorstehender Figuren perspektivisch von schräg unten,
- Figur 5: eine perspektivische Schrägansicht von oben auf eine Trägeranordnung der Anhängekupplung gemäß vorstehender Figuren,
- Figur 6: eine perspektivische Schrägansicht auf die Anhängekupplung gemäß Figur 2 von unten
- Figur 7: eine perspektivische Schrägansicht auf die Anhängekupplung gemäß Figur 1, jedoch ohne Stützelemente,
- Figur 8: eine Variante einer erfindungsgemäßen Anhängekupplung mit einem eine Verzahnung aufweisenden Halter noch während des Herstellungsprozesses,
- Figur 9: die Anhängekupplung gemäß Figur 8, jedoch schon fertiggestellt,
- Figur 10: die Anhängekupplung gemäß Figur 9 in Einzelteilen,
- Figur 11: ein Detail D1 der Anhängekupplung gemäß Figur 9 in Frontalansicht,
- Figur 12: einen Querschnitt durch eine weitere Ausführungsform einer erfindungsgemäßen Anhängekupplung im Bereich ihres Halters, beispielsweise entsprechend etwa einer Schnittlinie A-A in Figur 2,
- Figur 13: eine perspektivische Explosionsdarstellung eines weiteren Ausführungsbeispiels einer Anhängekupplung, von der in
- Figur 14: ein mittleres Detail dargestellt ist,
- Figur 15: eine Rückansicht des Details gemäß Figur 14,
- Figur 16: einen Schnitt durch das Detail gemäß Figur 15, etwa entlang einer Schnittlinie X-X,
- Figur 17: eine perspektivische Schrägansicht einer weiteren Variante einer Anhängekupplung mit einem Schließteil und einem Aufnahmeteil, die verschraubt sind,
- Figur 18: eine Explosionsdarstellung der Anhängekupplung gemäß Figur 17 während der Herstellung, und
- Figur 19: einen Querschnitt durch ein mittleres Detail der Anhängekupplung gemäß Figur 17, 18, etwa entlang einer Schnittlinie F-F,
- Figur 20: eine Variante der Anhängekupplung gemäß Figuren 13-16 mit Stützelementen,
- Figur 21: eine perspektivische Schrägansicht einer weiteren Variante einer Anhängekupplung gemäß Figuren 13-16 mit Stützelementen.

In der nachfolgenden Beschreibung der Ausführungsbeispiele sind teilweise gleiche oder gleichartige Komponenten vorhanden, die üblicherweise mit denselben Bezugsziffern versehen sind, somit also nur einmal erzeugt werden müssen. Insoweit Komponenten gleichartig sind, jedoch Unterschiede aufweisen, sind Bezugsziffern verwendet, die sich um jeweils 100 voneinander unterscheiden.

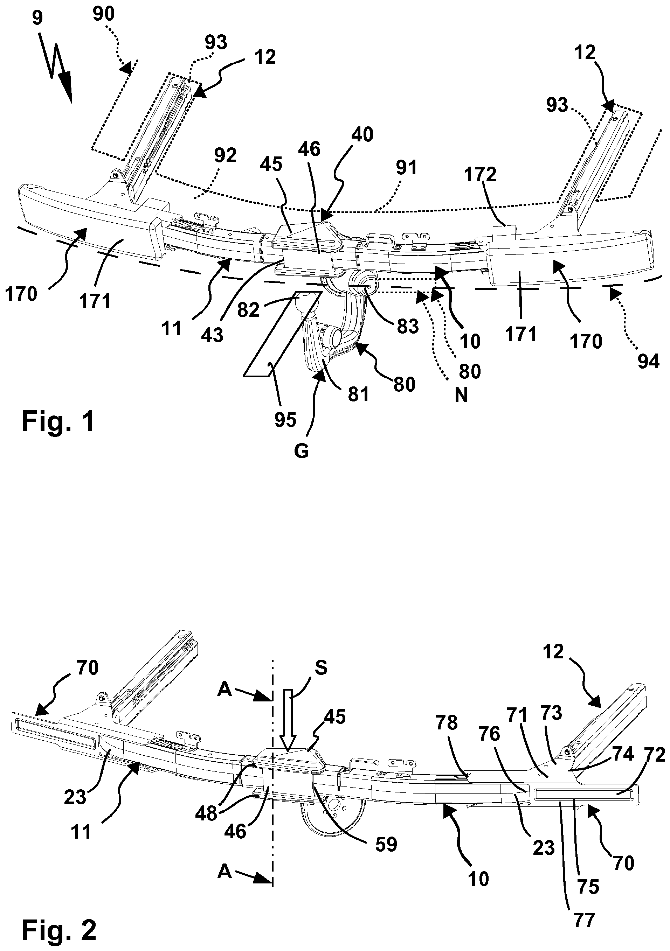

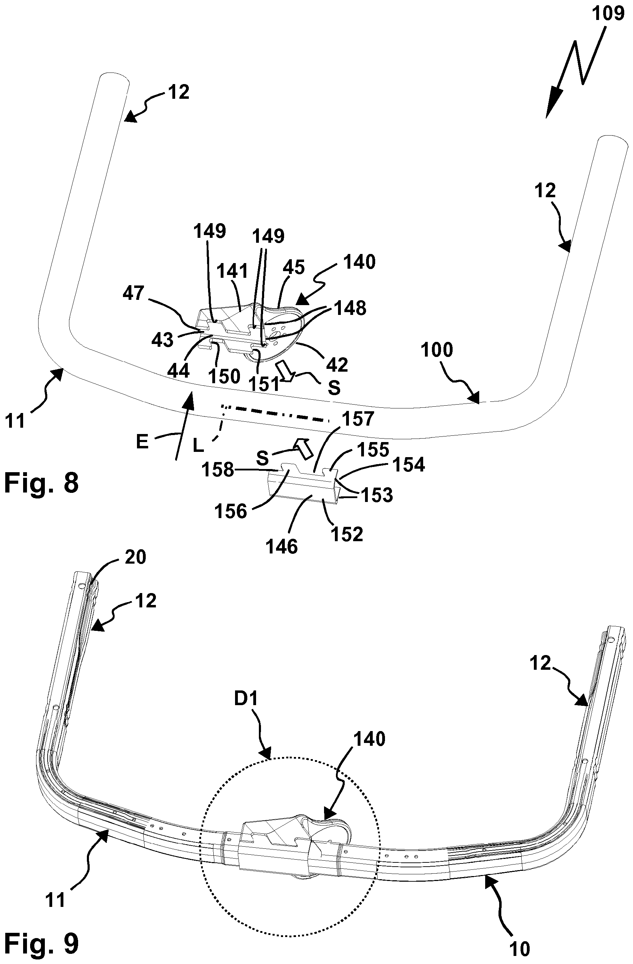

Eine Anhängekupplung 9 gemäß Figuren 1-7 sowie eine Anhängekupplung 109 gemäß Figuren 8-11 weist eine Trägeranordnung 10 mit einem Querträger 11 auf, der sich im an einem Kraftfahrzeug 90 montierten Zustand entlang eines Hecks 91 des Kraftfahrzeugs 90 erstreckt. Der Querträger 11 ist beispielsweise zwischen einer Karosserie 92 des Kraftfahrzeugs 90 und einem Stoßfänger 94 aufgenommen.

Von dem Querträger 11 abstehende Seitenträger 12 erstrecken sich im Wesentlichen in Fahrzeuglängsrichtung des Kraftfahrzeugs 90. Beispielsweise stehen die Seitenträger 12 etwa rechtwinkelig oder in einem Winkel von 80-110° von dem Querträger 11 ab. Die Seitenträger 12 sind beispielsweise in Seitenträgeraufnahmen 93 am Kraftfahrzeug 90, beispielsweise als Bestandteile der Karosserie 92, aufgenommen und gehalten. Beispielsweise sind die Seitenträgeraufnahmen 93 seitlich an der Karosserie 92 vorgesehen oder erstrecken sich zwischen dem Stoßfänger 94 und der Karosserie 91. Die Seitenträgeraufnahmen 93 können aber auch beispielsweise an einer Crashbox des Kraftfahrzeugs 90 angeordnet sein. Eine Außenumfangskontur der Seitenträger 12 ist an die Innenumfangskontur oder Aufnahmekontur der Seitenträgeraufnahmen 93 angepasst.

Der Querträger 11 weist einen Mittelabschnitt 13 auf, an welchem ein Halter 40 oder 140 (bei der Anhängekupplung 109) gehalten ist, der einen Kupplungsarm 80 trägt. Der Kupplungsarm 80 könnte nun fest am Halter 40, 140 befestigt sein, ist jedoch im vorliegenden Fall schwenkbar bezüglich des Halters 40, 140 gelagert.

Denkbar wäre aber auch eine lösbare Verbindung zwischen Kupplungsarm und Halter, beispielsweise anhand einer Steckverbindung. Im Falle einer beweglichen Lagerung oder einer Steckverbindung ist eine Fixiereinrichtung oder Verriegelungseinrichtung zum Fixieren oder Verriegeln des Kupplungsarms am Halter bei einer erfindungsgemäßen Anhängekupplung vorteilhaft.

Beispielsweise kann der Kupplungsarm 80 zwischen einer nach hinten vor das Heck 91 vorstehenden Gebrauchsstellung G, in welcher er zum Anhängen eines schematisch dargestellten Anhängers 95 oder Tragen eines Lastenträgers (nicht dargestellt) positioniert ist, und einer näher zum Heck 91 hin verstellten Nichtgebrauchsstellung N, die nicht zum Tragen eines Lastenträgers oder Anhängen eines Anhängers geeignet ist, verstellt werden. In der Nichtgebrauchstellung N ist der Kupplungsarm 80 beispielsweise unterhalb des Stoßfängers 94 oder zweckmäßigerweise zwischen dem Stoßfänger 94 und dem Heck 91 des Kraftfahrzeugs 90 positioniert. Zweckmäßigerweise liegt ein Armabschnitt 81 des Kupplungsarms 80 am Querträger 11 an oder verläuft im Wesentlichen parallel zu diesem.

Der Kupplungsarm 80 hat an einem freien Endbereich des Armabschnitts 81 einen Kuppelkörper 82, beispielsweise eine Kupplungskugel oder ein sonstiges Kupplungsstück, das zur Befestigung eines Anhängers oder Lastenträgers geeignet ist. Dort könnte aber auch ein Steckvorsprung oder eine Steckaufnahme, insbesondere für einen Lastenträger vorgesehen sein. Der andere Endbereich des Armabschnitts 81 ist mit einem Lager 83 verbunden, das am Halter 40, 140 befestigt ist und die Verstellung des Kupplungsarms 80 zwischen der Gebrauchsstellung G und der Nichtgebrauchstellung N ermöglicht.

Bei der Anhängekupplung 9, 109 ist nur jeweils ein einziger Halter und ein einziger Kupplungsarm vorgesehen. Dies soll allerdings nicht einschränkend verstanden werden. Bei einer erfindungsgemäßen Anhängekupplung könnten durchaus auch beispielsweise zwei Halter mit Kupplungsarmen vorgesehen sein, beispielsweise wenn sie zum Tragen eines Lastenträgers dient, der dann mit zwei Befestigungsarmen an den Kupplungsarmen befestigbar ist.

Der Halter 40, 140 ist etwa quer mittig am Querträger 11 angeordnet nämlich an einem Mittelabschnitt 13 des Querträgers 11. Seitlich neben dem Mittelabschnitt 13 erstrecken sich Krümmungsabschnitte 14 sowie Seitenabschnitte 15, die quer außen in Bogenabschnitte 16 übergehen. Die Bogenabschnitte 16 gehen in Seitenträgerabschnitte 17 über, die die Seitenträger 12 bilden. Mithin ist also die Trägeranordnung 10 so ausgestaltet, dass sie integral den Querträger 11 und die Seitenträger 12 bildet. Denkbar wäre aber auch eine alternative Ausführungsform, bei der an einem Querträger vom Querträger separate Bauteile bildende Seitenträger montiert oder in sonstiger Weise befestigt sind, beispielsweise verschweißt, verschraubt oder beides.

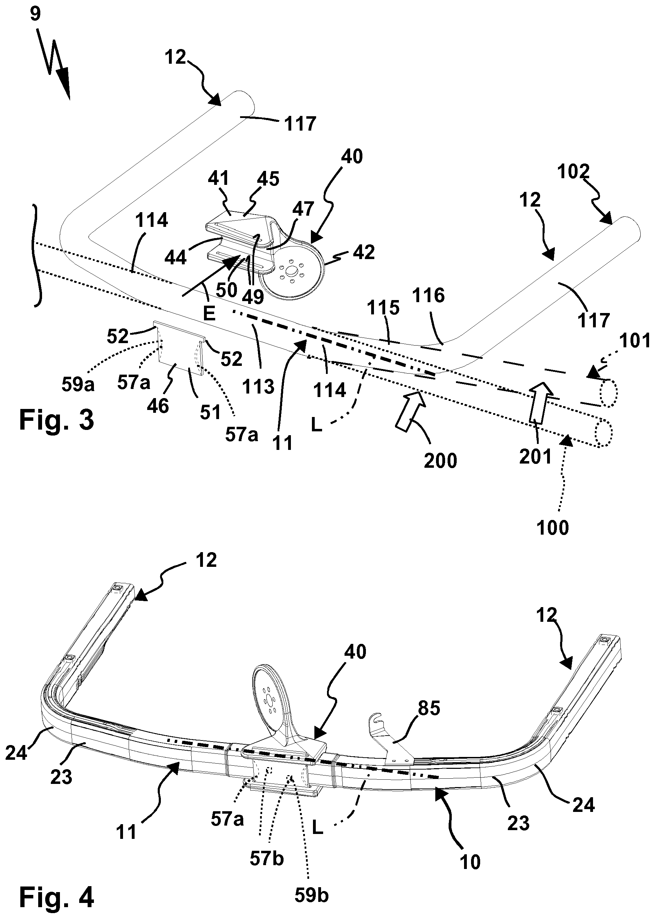

Ein mögliches, in Figur 3 schematisch dargestelltes Herstellungskonzept der Trägeranordnung 10 sieht vor, dass aus einem Trägerrohr 100, beispielsweise einem im Querschnitt runden Rohr (andere Geometrien sind ohne weiteres möglich) die Grundkonturen der Abschnitte 13-17 geformt werden. Beispielsweise wird im Rahmen einer Außenumformung 200 zunächst von einem zur Ausbildung des Mittelabschnitts 13 vorgesehenen Grund-Mittelabschnitt 113 ein Grund-Krümmungsabschnitt 114 zur Bildung des Krümmungsabschnitts 14 weg gebogen. Vom Grund-Krümmungsabschnitt 114 steht ein zur Ausbildung des Seitenabschnitts 15 vorgesehener Grund-Seitenabschnitt 115 ab. Dadurch entsteht ein Trägerrohr 101.

In einem anschließenden Schritt einer Außenumformung 201 werden dann die Seitenträger 12 gebildet, das heißt eine Basis für die Bogenabschnitte 16 bildende Grund-Bogenabschnitte 116 seitlich neben den Grund-Seitenabschnitten 115 ausgebildet. Von den Grund-Bogenabschnitten 116 erstrecken sich dann Grund-Seitenträgerabschnitte 117 weg, die eine Basis für Seitenträgerabschnitte 17 bilden. Die Grund-Seitenträgerabschnitte 117 stehen winkelig vom Grund-Mittelabschnitt 113 bzw. den Grund-Seitenabschnitten 115 ab. Die Grund-Seitenträgerabschnitte 117 bilden die Basis für die Seitenträger 12.

Im Ergebnis ist aus dem Trägerrohr 100 ein mit Krümmungsabschnitten versehenes und/oder an die Umfangskontur des Kraftfahrzeugs 90 bzw. der Karosserie 92 angepasstes Trägerrohr 102 durch eine entsprechende Umformung gebildet.

Auf diesem Wege wird bei einer erfindungsgemäßen Anhängekupplung eine belastbare, homogene Trägeranordnung gebildet. Es versteht sich, dass obige exemplarische Erläuterung auch bei anderen Geometrien eines Trägerrohrs möglich ist, d.h. dass ein Rohling oder Trägerrohr auch in andere, an eine jeweilige Fahrzeugkarosserie eines Kraftfahrzeugs angepasste Grundkontur gebracht werden kann, bevor nachfolgend erläuterte ebenfalls erfindungsgemäße Montageschritte oder Herstellungsschritte erfolgen.

Die Halter 40, 140 weisen Grundkörper 41, 141 auf, an denen eine Durchtrittsöffnung 43 zumindest jeweils partiell vorgesehen ist. Von dem Grundkörper 40, 141 steht ein Halteabschnitt 42, beispielsweise in der Art eines Haltearms oder eines vorstehenden Trägers, vor, an dem das Lager 83 gehalten ist. Der Halteabschnitt 42 ist beispielsweise plattenartig.

Das Lager 83 ist zweckmäßigerweise am Halteabschnitt 42 lösbar befestigbar, beispielsweise verschraubbar. Dies ermöglicht beispielsweise die Montage des Halters 40, 140 an der Trägeranordnung 10, bevor die weiteren Komponenten der Anhängekupplung 9, 109 montiert werden, nämlich das Lager 83 mit dem Kupplungsarm 80 oder beispielsweise auch ein Antrieb 84 für eine Verriegelungseinrichtung und/oder eine Verstellung des Kupplungsarms 80 zwischen der Gebrauchsstellung G und der Nichtgebrauchstellung N. Der Antrieb 84 und das Lager 83 sind zweckmäßigerweise an einander entgegengesetzten Seiten des Halteabschnitts 42 angeordnet. Der Antrieb 84 ist zweckmäßigerweise anhand einer Stütze 85 abgestützt, die ihrerseits wiederum an dem Querträger 11 befestigt ist, beispielsweise vernietet oder verschraubt. Der Antrieb 84 erstreckt sich also zwischen der Stütze 85 und dem Halteabschnitt 42, sodass er an seinen beiden Längsenden abgestützt ist.

Die Halter 40, 140 sind zweiteilig, sodass sie durch eine Steckbewegung entlang einer Einsteckrichtung E am Querträger 11, nämlich einem Halterbereich 25, befestigt werden können. Die Halter 40, 140 weisen ein Aufnahmeteil 45, 145 auf, an welchem eine Querträgeraufnahme 44 vorgesehen ist. Das Aufnahmeteil 45, 145 ist durch ein Schließteil 46, 146 verschlossen, so dass die Durchtrittsöffnung 43 durch das Aufnahmeteil 45, 145 und das Schließteil 46, 146 begrenzt ist. Der Querträger 11 erstreckt sich durch die Durchtrittsöffnung 43 hindurch.

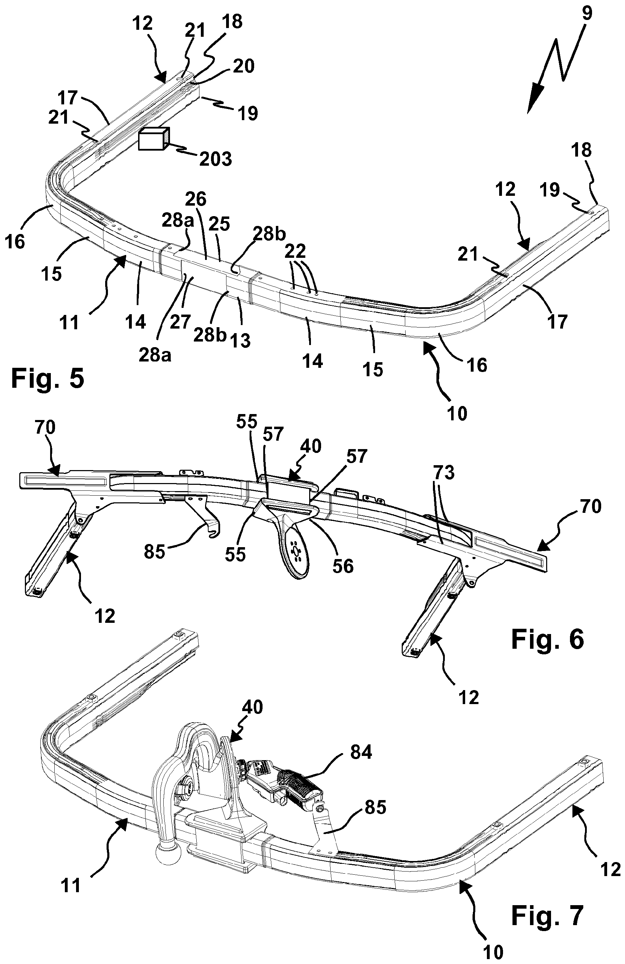

In die Querträgeraufnahme 44 kann der am Mittelabschnitt 13 vorgesehene Halterbereich 25 eingesteckt werden. Nun wäre es möglich, dass der Halter 40, 140 an der fertigen Trägeranordnung 10 gemäß beispielsweise Figur 5 befestigt wird. Das ist beispielsweise im Zusammenhang mit später noch erläuterten Stützelementen eine mögliche Variante.

Ein vorteilhaftes Konzept sieht jedoch die nachfolgende Vorgehensweise vor. Der Grund-Mittelabschnitt 113 des Trägerrohrs 102 wird schematisch dargestellt in Figur 3 entlang einer Steckachse oder Steckrichtung E in Eingriff mit der Querträgeraufnahme 44 des Aufnahmeteils 45, 145 gebracht. Dann wird das Aufnahmeteil 45, 145 verschlossen, nämlich mit dem Schließteil 46, 146. Der sozusagen einen Grund-Querträger bereitstellende Rohling oder das Trägerrohr 101 ist dann quer zu seiner Längsrichtung L (im montierten Zustand in Querrichtung des Fahrzeugs 90 verlaufend) in der Durchtrittsöffnung 43 fixiert, kann also in Fahrzeuglängsrichtung des Kraftfahrzeugs 90 nicht mehr aus der Durchstecköffnung 43 heraus gelangen.

Der Grund-Mittelabschnitt 13, der später den Halterbereich 25 ausbildet, liegt dabei an einem Boden 47 der Querträgeraufnahme 44 an oder dem Boden 47 gegenüber. Vom Boden 47 weg erstrecken sich Seitenschenkel 48, 148, die sozusagen klammerartig eine Oberseite sowie eine Unterseite des Trägerrohrs 102 im Bereich seines Mittelabschnitts 113 abstützen oder abstützen können.

Dem Boden 47 gegenüberliegend ist beim Halter 40 das Schließteil 46 vorgesehen, das mit einem Steckabschnitt 51 durch Durchstecköffnungen 49 an den beiden Seitenschenkeln 48 durchgesteckt ist und sich an beiden Seitenschenkeln 48 abstützt. Die Durchstecköffnungen 49 bilden Widerlager 50 des Aufnahmeteils 45, an denen das Schließteil 46 abgestützt ist. Das Schließteil 46 ist beispielsweise in der Art eines Schiebers oder Riegels ausgestaltet, der durch die Durchstecköffnungen 49 durchgesteckt ist.

Bevorzugt sind Stützvorsprünge 52 vorgesehen, die seitlich vor den Steckabschnitt 51 vorstehen. Die Stützvorsprünge 52 stützen sich beispielsweise an einer zu der Querträgeraufnahme 44 entgegengesetzten Seitenfläche, zum Beispiel eine Oberseite, eines der Seitenschenkel 48 ab, beispielsweise des oberen Seitenschenkels 48. Somit ist das Schließteil 46 am Aufnahmeteil 45 für den anschließenden Bearbeitungsschritt, insbesondere Umformungsschritt, optimal gehalten.

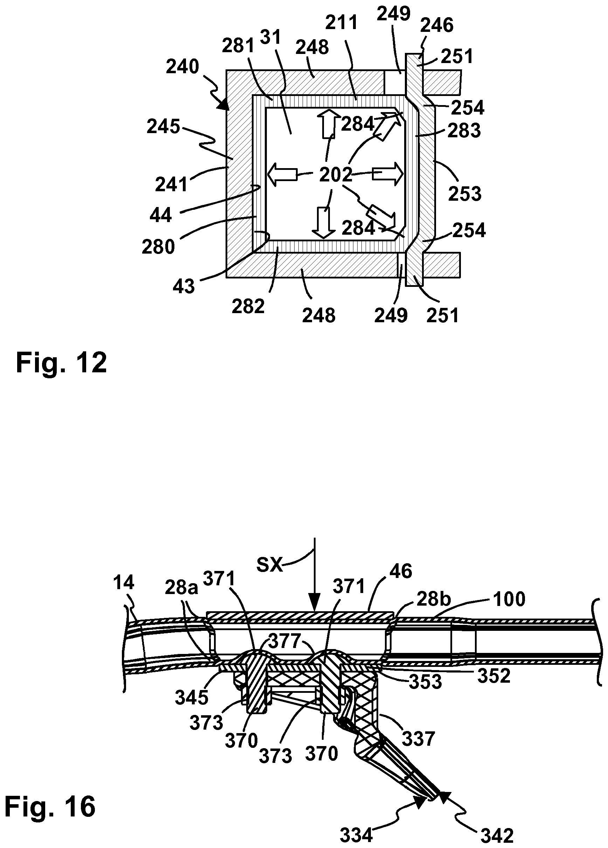

Dieser weitere Bearbeitungsschritt oder Umformungsschritt wird noch anhand von Figur 12 erläutert, bei der eine Variante des Halters 40, nämlich ein Halter 240 dargestellt ist.

Beim Halter 140 hat das Schließteil 146 eine im Wesentlichen U-förmige Gestalt. Von einer Grundwand 152 stehen beispielsweise Seitenschenkel 153 ab, die zusammen mit der Grundwand 152 einen weiteren Teil oder Teilbereich der Durchtrittsöffnung 43 des Halters 140 begrenzen. Zwischen der Grundwand 152 und den Seitenschenkeln 153 ist eine Aufnahme 154 ausgebildet, die zur Querträgeraufnahme 44 komplementär ist und diese sozusagen verschließt.

An den Seitenschenkeln 148 des Aufnahmeteils 145 befinden sich Zahnaufnahmen 149 zum Aufnehmen von Zähnen 156, 155, die an den Seitenschenkeln 153 des Schließteils 146 vorgesehen sind. Zwischen den Zähnen 155, 156 befindet sich eine Zahnaufnahme 157 und neben dem Zahn 156 eine weitere Zahnaufnahme 158.

Die Zahnaufnahmen 157, 158 sind zur Aufnahme komplementärer Zähne 159, 160 des Aufnahmeteils 145 vorgesehen.

Das Schließteil 146 kann an das Aufnahmeteil 145 entlang einer Steckrichtung S (Figur 8) angesteckt werden und dabei den Grund-Mittelabschnitt 113 des Trägerrohrs 102 aufnehmen. Die Einsteckrichtung E zum Einstecken des Grund-Mittelabschnitts 113 in die Querträgeraufnahme 44 und die Steckrichtung S sind zueinander schräg verlaufend, jedenfalls winkelig. Jedenfalls sind schräge Seitenflächen 151 an den Zähnen 155, 156,159 sowie 160 vorgesehen sowie dazu passende, ebenfalls schräge Seitenflächen an den korrespondierenden Zahnaufnahmen.

Auch die Längsrichtung L des Grund-Mittelabschnitts 13 und die Steckrichtung S sind vorteilhaft zueinander winkelig.

Wenn der Grund-Mittelabschnitt 113 und somit der Querträger 11 entgegen seiner Einsteckrichtung E auf das Schließteil 146 im Sinne einer Entfernung vom Aufnahmeteil 145 einwirkt, bewirkt diese Schrägverzahnung oder der Schrägverlauf der Seitenflächen 151, dass das Schließteil 146 eine Kraftkomponente in Richtung der Steckachse S erfährt, in welcher es sich jedoch nicht vom Aufnahmeteil 145 entfernen kann, wenn es wie später noch erläutert durch eine Umformung des Querträgers 11 am Aufnahmeteil 145 fixiert ist.

Der Halter 240 weist einen Grundkörper 241 auf, der dem Grundkörper 41 prinzipiell entspricht und beispielsweise einen Halteabschnitt 42 für den Kupplungsarm 80 aufweist (nicht dargestellt). Der Grundkörper 241 bildet die Basis für ein Aufnahmeteil 245, das eine Querträgeraufnahme 44 aufweist. Die Querträgeraufnahme 44 wird seitlich von Seitenschenkeln 248 begrenzt, in die ein Querträger 211, grundsätzlich entsprechend dem Querträger 11, eingesteckt werden kann.

Der Querträger 211 weist einen Innenhohlraum 31 auf, der ebenfalls bei dem Trägerrohr 102 vorhanden ist. Beispielsweise ist der Querträger 211 vor dem in Figur 12 bereits abgeschlossenen Bearbeitungsschritt im Querschnitt rund oder polygonal, beispielsweise etwa rechtwinkelig oder quadratisch. Jedenfalls hat der Querträger 211 eine Seitenwand 280, der eine Seitenwand 283 gegenüberliegt. Die Seitenwände 280, 283 sind durch weitere Seitenwände 281, 282 miteinander verbunden, die beispielsweise Oberseiten und Unterseiten des Querträgers 211 ausbilden.

An den Seitenschenkeln 248 sind Durchstecköffnungen 249 vorgesehen, durch die ein Schließteil 246 etwa in der Art des Schließteils 46 durchgesteckt ist. Das Schließteil 246 hat Steckabschnitte 251, die in die Durchstecköffnungen 249, die Widerlager bilden, eingesteckt sind.

Zwischen den Steckabschnitten 251 erstreckt sich ein Wandabschnitt 253, der zur Abstützung der Seitenwand 283 vorgesehen ist. Die Steckabschnitte 251 gehen in den Wandabschnitt 253 mit Krümmungsabschnitten 254 über, sodass der Innenquerschnitt der Durchtrittsöffnung 43 des Halters 42 nicht quadratisch oder rechteckig ist, sondern eine Vertiefung aufweist. Die Durchstecköffnungen 249 weisen eine solche Querschnittsfläche auf, dass die sozusagen gewölbte Schottwand bzw. der Wandabschnitt 253 mit den Krümmungsabschnitten 254 durch eine jeweilige Durchstecköffnung 249, zumindest eine davon, beispielsweise die obere, durchsteckbar ist.

Durch den anschließend beschriebenen Umformungsschritt des Querträgers 211 bzw. dessen Rohling anhand einer Innenumformung 202 (dargestellt durch Pfeile) wird der Querträger 211 in seinem Haltebereich in der Querträgeraufnahme 44 sozusagen aufgebläht oder aufgeweitet, sodass er sich an die Innenumfangskontur der Durchtrittsöffnung 43 anpasst. Dadurch werden beispielsweise Krümmungsabschnitte 284 zwischen der Seitenwand 283 und den Seitenwänden 281, 282 ausgebildet, die eine Anpassung an die Krümmungsabschnitte 254 des Schließteils 246 darstellen. Das Schließteil 246 ist dann durch den Querträger 211 am Aufnahmeteil 245 fixiert. Gleichzeitig ist auch der Halter 240 am Querträger 211 formschlüssig gehalten.

Dieses Konzept ist auch bei den Haltern 40, 140 realisiert, das heißt die Schließteile 46, 246 sind an den Aufnahmeteilen 45, 145 durch die Umformung der Querträger 11 im Rahmen einer Innenumformung etwa entsprechend der Innenumformung 202 fixiert.

Bei der Innenumformung 202 wird beispielsweise ein Fluid, insbesondere Wasser, in den jeweiligen Innenhohlraum 31 des Trägerrohrs 102 eingepresst. Dies ist beispielsweise als sogenanntes Hydroforming bekannt.

Im Rahmen dieser Innenumformung wird das Grundprofil des Querträgers 211 und der optional vorgesehenen Seitenträger ausgebildet. Beispielsweise werden außen am Trägerrohr 102 Formen angeordnet, exemplarisch und schematisch durch eine Form 203 dargestellt, in die hinein sich das Trägerrohr 102 verformen kann, wenn sein Innenhohlraum 31 druckbeaufschlagt wird.

Auf diesem Wege werden beispielsweise an freien Enden 18 der Seitenträger 12 Verjüngungen 19 ausgebildet, so dass diese freien Enden 18 optimal in die Seitenträgeraufnahmen 93 hinein passen. Weiterhin kann das Profil insbesondere im Bereich der freien Enden 18 ausgeprägt werden, zum Beispiel in der Art einer Profil-Vertiefung 20 oder mehrerer entsprechender Profilvertiefungen. Beispielsweise ist eine nach innen in Richtung des Innenhohlraums 31 sich erstreckende Vertiefung vorgesehen, um jedenfalls die Querschnittsfläche der freien Enden 18 der Querschnittsfläche des Trägerrohrs 102 zu verkleinern.

In gleicher Weise kann aber auch beispielsweise eine Querschnittsaufweitung 30 im Bereich des Halters 40, 140 erfolgen, sodass der Halterbereich 25 ausgebildet ist. Der Grund-Mittelabschnitt 113 des Trägerrohrs 102 wird im Rahmen der Innenumformung sozusagen aufgeweitet oder aufgebläht, so dass er an dem Innenquerschnitt der Durchtrittsöffnung 43 formschlüssig anliegt.

An zueinander winkeligen Seitenwänden des Querträgers 11 bilden sich dabei beispielsweise eine Vertiefung 26 sowie eine Vertiefung 27, in denen die entsprechenden Stützkonturen oder Stützflächen des Halters 40, 140 aufgenommen sind. Auch an den nicht in Figur 5 sichtbaren Seiten sind derartige Vertiefungen vorhanden, an denen sich entsprechende Stützflächen oder Stützkonturen des Halters 40, 140 abstützen.

Beispielsweise sind durch die Vertiefungen 26, 27 Stützkonturen, z.B. Seitenkanten 28a, 28b, gebildet, an denen sich die entsprechenden Seitenkanten 55, 56, 57 abstützen können. Somit sind Verschiebesicherungskonturen 59 gebildet, da nämlich die sich an den Seitenkanten 28 abstützenden Seitenkanten 55-57 eine Verschieblichkeit des Halters 40, 140 bezüglich der Längsrichtung L des Querträgers 11 unterbinden. Weiterhin sorgen die Verschiebesicherungskonturen 59 dafür, dass sich das Schließteil 46 vom Aufnahmeteil 45 nicht mehr lösen kann.

An dieser Stelle sei auf eine Variante beim Schließteil 46 hingewiesen. Beispielsweise können dessen Seitenkanten 57 auch eine Krümmung aufweisen, sodass sie beispielsweise in der Gestalt der Seitenkanten 57a gemäß Figur 3 ausgestaltet sind. Das Schließteil 46 hat in diesem Fall sozusagen eine Taillierung. An den Seitenkanten 57a liegt der Querträger 11 mit entsprechenden Formschlusskonturen, die sich durch die Innenumformung 202 ergeben, seitlich an. Durch die Seitenkanten 57a sind Verschiebesicherungskonturen 59a gebildet, die für eine Fixierung des Schließteils 46 am Aufnahmeteil 45 sorgen.

Die Seitenkanten 57a mit ihrem gekrümmten Verlauf sorgen dafür, dass das beispielsweise als Schieber ausgestaltete Schließteil 46 nicht aus den Durchstecköffnungen 49 herausgezogen werden kann. Mithin fixiert also der Querträger 11 das Schließteil 46 am Aufnahmeteil 45.

Die Seitenkanten 57a bilden gleichzeitig eine Verschiebesicherung und eine Verdrehsicherung des Halters 40 bezüglich des Querträgers 11.

An dieser Stelle sei aber bemerkt, dass allein schon die polygonale Querschnittskontur der Durchtrittsöffnung 43 dafür sorgt, dass der daran formschlüssig anliegende Querträger 11 den Halter 40, 140 verdrehsicher bezüglich beispielsweise der Längsachse oder Längsrichtung L sichert.

Weiterhin können aber auch beispielsweise Bohrungen oder sonstige Aussparungen 57b am Schließteil 46 vorgesehen sein, so dass dieses durch den entsprechend umgeformten und somit in die Aussparungen 57b mit Formschlusskonturen (nicht dargestellt) eingreifenden Querträger 11 am Aufnahmeteil 45 fixiert ist. Die Aussparungen 57b bilden beispielsweise Verschiebesicherungskonturen 59b.

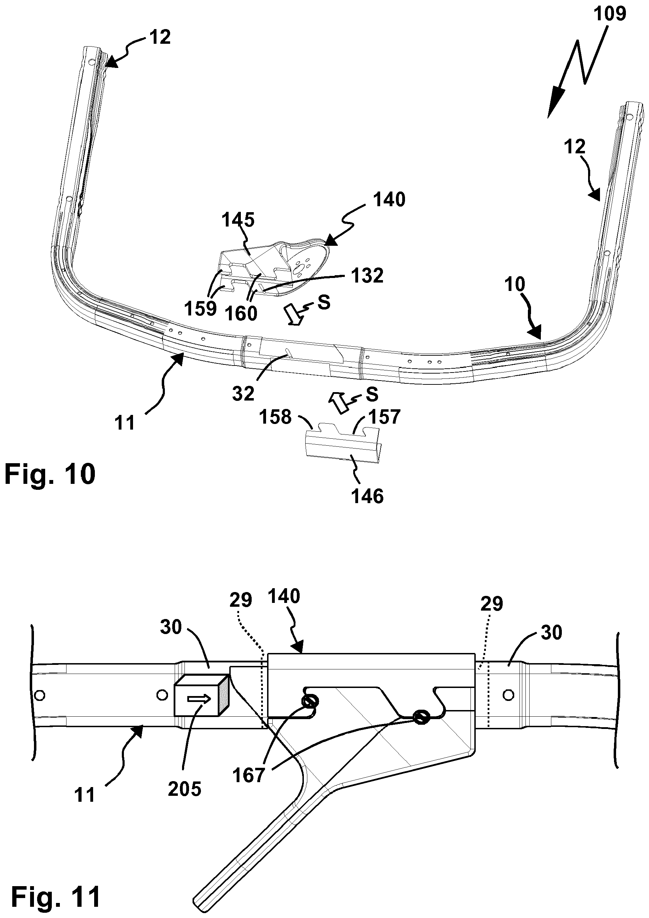

Als zusätzliche Sicherheitsmaßnahme kann eine Umformung des Schließteils oder des Aufnahmeteils vorgenommen werden. Beispielsweise sind im Bereich der Verzahnung des Aufnahmeteils 145 und des Schließteils 146 wie in Figur 11 dargestellt Prägungen oder Stempelungen 167 vorgenommen, die zusätzlich zu der Fixierung, die das Schließteil 146 am Aufnahmeteil 145 aufgrund der Innenumformung des Querträgers 11 aufweist, dafür sorgen, dass selbst bei einer übermäßigen Belastung des Halters 140, beispielsweise bei einem Heck-Aufprall auf das Kraftfahrzeug 90 oder bei einer unzulässig hohen Anhängelast am Kupplungsarm 80, der Halter 140 nicht aufgeweitet wird, d.h. dass sich die Seitenschenkel 148 oder die Seitenschenkel 153 oder beide voneinander weg bewegen können.

Auch an anderen Stellen kann der Querträger 11 den Halter 40, 140 fixieren oder formschlüssig halten, insbesondere für eine Fixierung des Schließteils 46, 146 am Aufnahmeteil 45, 145 sorgen. Beispielsweise können Formschlusskonturen 29 in Gestalt von Auswölbungen oder dergleichen seitlich an den Seitenkanten 55 anliegen (Figur 11). Derartige Vorsprünge oder Auswölbungen können auch durch eine Außenumformung des Querträgers 11 realisiert werden, beispielsweise durch ein schematisch dargestelltes Umformwerkzeug 205, das auf den Querträger 11 in Richtung auf den Halter 40, 140 bzw. die Seitenkanten 55 hin im Sinne einer Verschiebung bzw. Verdrängung einwirkt.

Im Rahmen der Innenumformung bzw. Innenhochdruckumformung, die vorteilhaft vorgesehen ist, kann aber auch eine Verformung des Querträgers 11 im Innenumfangsbereich der Querträgeraufnahme 44 erfolgen. Beispielsweise wird auf diesem Wege eine Formschlusskontur 32 ausgebildet, die in eine korrespondierende, am Innenumfang der Querträgeraufnahme 44 vorgesehene Aussparung 132 am Halter 40 oder 140 eingreift (siehe Figur 11).

Ein an sich eigenständiges, aber auch eine vorteilhafte Ausgestaltung der Erfindung darstellendes Konzept stellen Stützelemente 70 dar, die an Längsendbereichen 23 des Querträgers 11 angeordnet sind und diesen sozusagen nach queraußen über die Seitenträger 12 hinaus verlängern. Die Stützelemente 70 sind beispielsweise an einem Übergangsbereich 24 zwischen dem Querträger 11 und dem Seitenträger 12, zum Beispiel den Bogenabschnitten 16, angeordnet.

Die Stützelemente 70 weisen beispielsweise einen Befestigungsabschnitt 71 auf, der zur Befestigung an der Trägeranordnung 10 dient. Von dem Befestigungsabschnitt 71 steht ein Stützabschnitt oder Stützschenkel 72 nach quer außen vor die Längsendbereiche 23 des Querträgers 11 vor, sodass dieser in Bezug auf seine Längsrichtung L sozusagen verlängert ist.

Die Befestigungsabschnitte 71 weisen Schenkel 73 auf, die von einer Grundwand oder Basiswand 77 winkelig abstehen. Die Basiswand 77 bildet einen Bestandteil des Stützschenkels 72. Die Basiswand 77 und die Schenkel 73 begrenzen beispielsweise eine Aufnahme 78.

Die Schenkel 73 haben einen Abschnitt 74, der beispielsweise anhand einer Verschraubung, Verrastung oder dergleichen mit dem Querträger 11 verbunden ist. Beispielsweise liegen die Schenkel 73 auf einer Oberseite und einer Unterseite des Querträgers 11 zumindest abschnittsweise flächig an und sind dort durch Befestigungsmittel, Schrauben, Nieten oder dergleichen, befestigt.

Ein Abschnitt 75 der Schenkel 73 steht bis zu dem benachbarten Seitenträger 12 vor. Der Abschnitt 75 ist an diesem Seitenträger 12 vorteilhaft noch befestigt, beispielsweise mit diesem verschraubt.

Zwischen den Stützschenkeln 73 und neben der Grundwand oder Basiswand 73 ist eine Aussparung 76 vorgesehen, in der der Querträger 11 aufgenommen ist. Auf diesem Weg ist beim Stützelement 70 eine Anpassung an die Außenkontur oder den Verlauf der Trägeranordnung 10 realisiert.

An den Stützelementen 70 ist jeweils ein Dämpferelement 170 befestigt, beispielsweise verrastet und/oder verklebt und/oder eingehakt. Ein jeweiliges Dämpferelement 170 besteht zum Beispiel aus einem nachgiebigen Material, insbesondere einem Schaumstoffmaterial, Gummi oder dergleichen. Das Dämpferelement 170 dient zur Abstützung beispielsweise des Stoßfängers 94. Das Dämpferelement 170 kann mit elastischer Spannung zwischen einerseits dem Stützelement 70 und andererseits dem Stoßfänger 94 gehalten sein. Jedenfalls überträgt das Dämpferelement 170 eine Krafteinwirkung vom Stoßfänger 94 zumindest im Falle eines Crashs oder Heckaufpralls auf das Kraftfahrzeug 90 auf ein jeweiliges Stützelement 70 und somit die Trägeranordnung 71.

Es versteht sich, dass zwischen dem Dämpferelement 170 und dem Stoßfänger 94 auch ein Abstand vorgesehen sein kann.

Das Dämpferelement 170 weist einen Grundkörper 171 auf. Der Grundkörper 171 liegt beispielsweise flächig an der Grundwand oder Basiswand 77 an oder kann sich zumindest im Falle eines Heckaufpralls oder bei Verformung des Stoßfängers 94 an der Basiswand 77 abstützen. Insbesondere überdeckt der Grundkörper 171 auch den Stützschenkel 72, sodass im Prinzip die Längsenden der Trägeranordnung 10 bezogen auf die Fahrzeugquerrichtung des Kraftfahrzeugs 90 jeweils mit einem Dämpferelement 170 überdeckt sind.

Der Grundkörper 171 überdeckt auch die Aussparung 76, wo er sich beispielsweise direkt an der Frontseite des Querträgers 211 im Bereich der Seitenabschnitt 15 abstützen kann.

Der Grundkörper 171 könnte aus einem nicht flexiblen, beispielsweise harten Kunststoff oder aus Metall bestehen. Besonders bevorzugt ist es, wenn ein jeweiliges Dämpferelement 170 jedoch eine dämpfende Eigenschaft aufweist. Der Grundkörper 171 ist dann vorzugsweise zumindest partiell flexibel, zum Beispiel aus Schaumstoff, nachgiebigem Kunststoff oder dergleichen hergestellt.

Von dem Grundkörper 171 stehen vorzugsweise als Hakenvorsprünge ausgestaltete Haltearme 172 ab, die beispielsweise die Stützelemente 70 und/oder den Querträger 11 umgreifen oder zweckmäßigerweise hintergreifen. Die Haltearme 172 bilden beispielsweise eine im Querschnitt etwa U-förmige Aufnahme aus. In diese Aufnahme greift der Querträger 11 oder das Stützelement 70 ein. An dieser Stelle sei bemerkt, dass ein jeweiliges Dämpferelement 170 auch beispielsweise mit einem Stützelement 70 verklebt, verschraubt, vernietet oder dergleichen anderweitig verbunden sein kann.

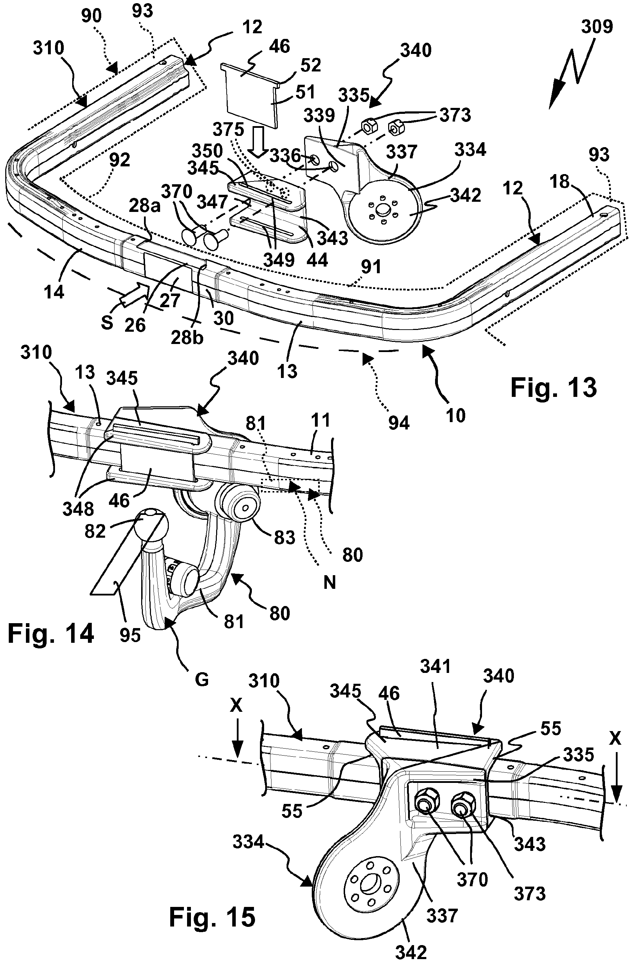

Ein Halter 340 der Anhängekupplung 309 gemäß Figur 13-15 weist ein Aufnahmeteil 345 auf, welches ähnlich wie das Aufnahmeteil 45 aufgebaut ist, jedoch nicht integral den Halteabschnitt 42 oder Haltearm für den Kupplungsarm 80 aufweist. Das Aufnahmeteil 345 dient sozusagen als Träger für ein Anbauteil 334, welches zum Tragen des Kupplungsarms 80 vorgesehen ist.

Das Aufnahmeteil 345 ist anhand des erläuterten Schließteils 46 verschließbar, sodass das Aufnahmeteil 345 und das Schließteil 346 zusammen eine Durchtrittsöffnung 343 begrenzen, ähnlich der bekannten Durchtrittsöffnung 43. Die Durchtrittsöffnung 343 begrenzt eine Querträgeraufnahme 44.

Das Aufnahmeteil 345 weist einen Grundkörper 341 auf und ist in Bezug auf die Begrenzung der Durchtrittsöffnung 343 sowie das Haltekonzept für das Schließteil 346 ähnlich wie das Aufnahmeteil 45 aufgebaut. Beispielsweise stehen von einem Boden 347 des Aufnahmeteils 345 Seitenschenkel 348 ab, an denen jeweils eine Durchstecköffnung 349 für das Schließteil 46 vorgesehen ist. Das Schließteil 46 kann mit seinem Steckabschnitt 51 durch die Durchstecköffnungen 349 durchgesteckt werden, bis dessen Stützvorsprünge 52 an den sich seitlich neben den Durchstecköffnungen 349 befindlichen Abschnitten des Aufnahmeteils 349 anschlagen, die ein Widerlager 350 darstellen. Der montierte Zustand ist in den Figuren 14 und 15 dargestellt.

Eine Trägeranordnung 310 der Anhängekupplung 309 entspricht im Wesentlichen der Trägeranordnung 10. Dementsprechend ist durch die bereits im Zusammenhang mit dem Halter 40 oder 140 und der Trägeranordnung 10 erläuterte vorteilhafte Vorgehensweise auch bei der Anhängekupplung 309 und der Trägeranordnung 310 vorteilhaft, d.h. dass durch eine Innenumformung insbesondere des Mittelabschnitts 13 im Bereich des Halters 340 ein formschlüssiger Halt des Halters 340 am Mittelabschnitt 13 erzielbar ist, wobei sich unter anderem die Formschlusskonturen 26 bzw. die Seitenkanten 28a, 28b sowie die Vertiefung 27 ausbildet, um den Halter 340 formschlüssig an der Trägeranordnung 10 zu fixieren. Eine zusätzliche oder alternative vorteilhafte Maßnahme, um einen formschlüssigen oder festen Halt des Halters 340 an der Trägeranordnung 10 zu erzielen, stellt die folgende Ausführungsform dar:

Zu dem formschlüssigen und festen Halt des Halters 340 an der Trägeranordnung 10 tragen nämlich Bolzen 370 bei oder dieser Halt wird durch Bolzen 370 ermöglicht, deren Bolzenköpfe 371 in die Durchtrittsöffnung 343 bzw. die Querträgeraufnahme 44 vorstehen. Die Bolzen 370 dienen zur Befestigung des Anbauteils 334, welches mit dem Aufnahmeteil 345 verschraubt ist.

Das Anbauteil 334 weist einen Befestigungsabschnitt 335 auf, an dem eine Stützfläche 339 zur Abstützung an dem Aufnahmeteil 345 vorgesehen ist. Die Stützfläche 339 ist vorzugsweise eine Planfläche, ebenso wie eine der Stützfläche 339 zugeordnete und die Stützfläche 339 abstützende Stützfläche 353, die an einer den Boden 347 bereitstellenden Bodenwand 352 des Aufnahmeteils 345 vorgesehen ist.

Vor die Bolzenköpfe 371 stehen Bolzenschäfte 372 vor, welche durch Durchtrittsöffnungen 375 am Boden 347 des Grundkörpers 341 oder des Aufnahmeteils 345 sowie ferner durch Montageöffnungen 336 am Befestigungsabschnitt 335, insbesondere der Stützfläche 339, durchgesteckt sind. An der von der Stützfläche 339 abgewandten Rückseite des Befestigungsabschnitts 339 sind Muttern 373 auf die Bolzenschäfte 372 aufgeschraubt.

Vor den Befestigungsabschnitt 335 steht ein Armabschnitt 337 ab, an dem ein Haltekörper 342 in der Art des Haltekörpers 42 zum Halten des Lagers 83 für den Kupplungsarm 80 angeordnet ist.

Durch die während der Innenumformung oder Innenhochdruckumformung des Mittelabschnitts 13 der Trägeranordnung 10 oder des Querträgers 11 schon in die Durchtrittsöffnung 343 vorstehenden Bolzenköpfe 371 ist im Bereich der Bolzenköpfe 371 der Querschnitt der Durchtrittsöffnung 343 enger als neben den Bolzenköpfen 371, so dass sich Umformungspartien 377 des Trägerrohrs 100 ausbilden, die formschlüssig an den Bolzenköpfen 371 anliegen und diese entgegen einer Steckachsrichtung SX, entlang derer die Bolzen 370 durch die Durchtrittsöffnungen 375 und die Montageöffnungen 336 durchgesteckt sind, abstützen. Somit ist quasi ein Doppeleffekt erreicht, nämlich einerseits dass die Bolzen 370 am Aufnahmeteil 345 unverlierbar und vorzugsweise unverdrehbar gehalten sind, und dass zudem die Bolzen 370, insbesondere deren Bolzenköpfe 371, eine Verdrehsicherung und/oder Verschiebesicherung des Halters 340 relativ zur Trägeranordnung 10, insbesondere relativ zum Querträger 11 bilden. Zur Unverdrehbarkeit bzw. Verdrehsicherung der Bolzen 370 bezüglich des Aufnahmeteils 345 können beispielsweise Formschlusskonturen, Vertiefungen, Vorsprünge, Schraubschlitze oder dergleichen, an den Bolzenköpfen 371 vorgesehen sein, die von den Umformungspartien 377 formschlüssig gehalten werden.

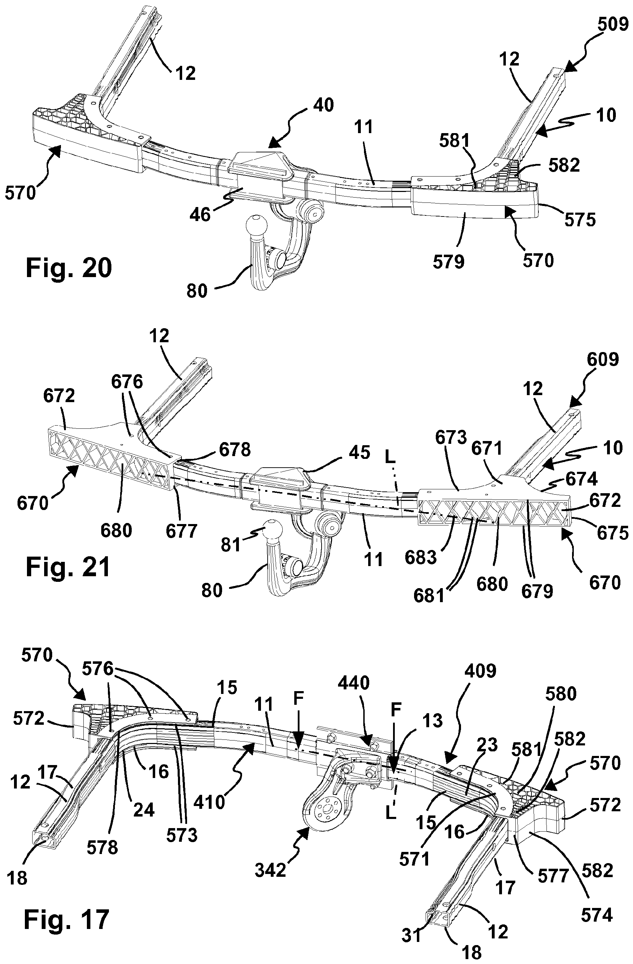

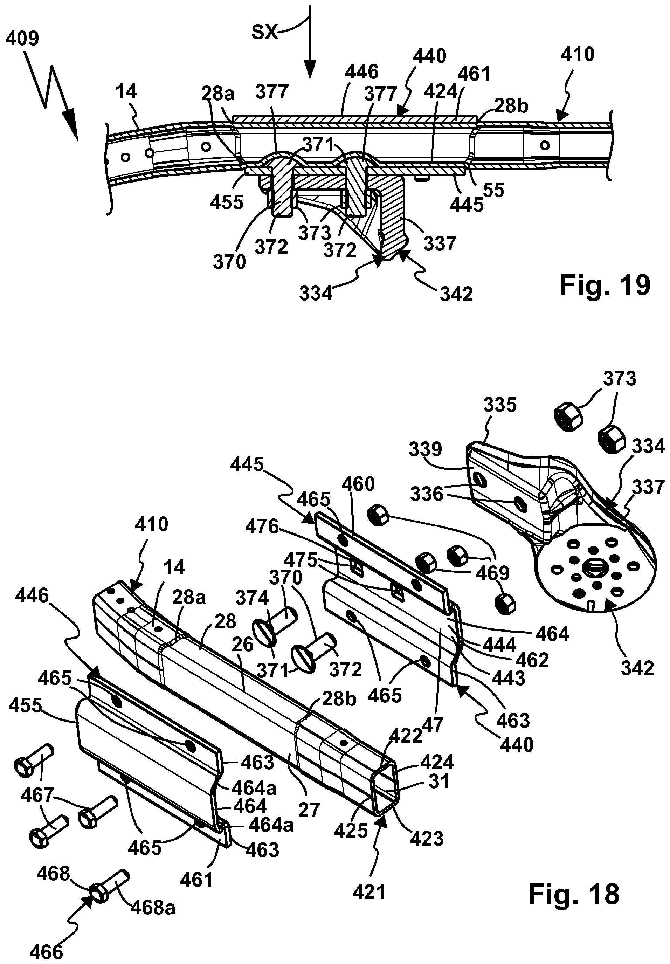

Bei der in den Figuren 17-19 dargestellten Anhängekupplung 409 ist ebenfalls ein Formschlusskonzept zur Fixierung eines Halters 440 bezüglich einer Trägeranordnung 410 vorgesehen, welche aber im Grundsatz ähnlich aufgebaut ist wie die Trägeranordnung 10. Der wesentliche Unterschied ist darin zu sehen, dass ein Aufnahmeteil 445 mit einem Schließteil 446 anhand einer Schraubverbindung verbunden ist.

Das Aufnahmeteil 445 und das Schließteil 446 des Halters 440 sind beispielsweise von Halterelementen 460, 461 gebildet. Die Halterelemente 460, 461 sind beispielsweise in der Art von Klammerelementen ausgestaltet, so dass sie den Querträger 11 klammerartig umgreifen oder halten. Die Halterelemente 460, 461 sind vorzugsweise weitgehend gleich ausgestaltet, sodass sich ein Gleichteilprinzip ergibt. Beispielsweise sind die Halterelemente 460, 461 in der Art von Halterplatten, jedoch mit einer Aufnahme oder Ausnehmung für den Querträger 11 ausgestaltet.

Die Halterelemente 460, 461 weisen beispielsweise Bodenabschnitte 462 auf, von denen seitlich Flanschabschnitte 463 abstehen. Die Flanschabschnitte 463 der einander gegenüberliegenden Halterelemente 460, 461 liegen mit ihren Flachseiten oder Stützseiten insbesondere flächig aneinander an. Die Flanschabschnitte 463 weisen Montageöffnungen 465 für Schrauben 467 einer Schraubenanordnung 466 auf. Beispielsweise sind an jedem der Flanschabschnitte 462 jeweils mindestens zwei oder weitere Montageöffnungen 465 vorgesehen, sodass jeder Flanschabschnitt 463 mit mindestens zwei Schrauben 467 mit dem gegenüberliegenden anderen Flanschabschnitt 463 verschraubt werden kann. Die Schrauben 467 stützen sich mit ihren Schraubenköpfen 468 am einen Flanschabschnitt 463 ab. Bolzenschäfte 468a der Schrauben 467 durchdringen die Montageöffnungen 465, wobei auf die Bolzenschäfte 468a jeweils Muttern 469 aufgeschraubt sind, die sich am andern Flanschabschnitt 463 abstützen.

Der Querträger 11 ist beispielsweise als ein Profilkörper 421 ausgestaltet. Der Profilkörper 421 weist eine obere Seitenwand 422, eine untere Seitenwand 423 sowie bezüglich der Fahrtrichtung eine vordere Seitenwand 424 und eine hintere Seitenwand 425 auf. Zwischen den Seitenwänden 422-425 können Rundungen vorgesehen sein. Es sei betont, dass der rechteckige Querschnitt des Profilkörpers 421 eine Option darstellt, d.h. dass selbstverständlich auch andere Profile, wie beispielsweise runde Profile oder dergleichen alternativ möglich sind.

Von dem Flanschabschnitt 463 weg erstrecken sich schräge, an beispielsweise Krümmungsbereiche zwischen den Seitenwänden 422-425 des Querträgers 11 angepasste Abschnitte 464a, die in eine Bodenwand 464 eines jeweiligen Halterelements 460, 461 übergeht. Durch die muldenförmige Ausgestaltung der Abschnitte 464a und der Bodenwand 464 insgesamt sind durch die beiden einander gegenüberliegenden Halterelemente 460, 461 eine Durchtrittsöffnung 443 und eine Querträgeraufnahme 444 für den Querträger 11 begrenzt.

Das Aufnahmeteil 445 dient ähnlich wie das Aufnahmeteil 345 zum Halten des bereits erläuterten Anbauteils 334. Dazu sind an dem Aufnahmeteil 445 Durchtrittsöffnungen 475 vorgesehen, durch die die Bolzenschäfte 372 der Bolzen 370 durchsteckbar sind. Der Befestigungsabschnitt 335 stützt sich dann am Bodenabschnitt 462 des Aufnahmeteils 445 ab. Die Durchtrittsöffnungen 475 befinden sich am Bodenabschnitt 462. Dort sind zweckmäßigerweise noch Verdrehsicherungskonturen 476 vorgesehen, an denen sich Verdrehsicherungskonturen 374 der Bolzen 370 abstützen können, sodass die Bolzen 370 um die Steckachse SX, entlang derer sie durch die Durchtrittsöffnungen 475 gesteckt werden, in den Durchtrittsöffnungen 475 nicht mehr verdrehbar sind. Die Verdrehsicherungskonturen 374, 476 sind beispielsweise durch polygonale, insbesondere quadratische, Außenumfangskonturen bzw. Innenumfangskonturen gebildet.

Entgegen der Steckachse SX oder längs der Steckachse SX sind die Bolzen 370 durch die bereits im Zusammenhang mit der Anhängekupplung 309 erwähnte Innenumformung des Querträgers 11 fixiert. Beispielsweise bilden sich die bereits erwähnten Umformungspartien 377, welche die Bolzenköpfe 371 abstützen, an der Seitenwand 424 des Profilkörpers 421 aus. Zugleich wird durch diese Maßnahme ein formschlüssiger Halt des Halters 440 bezüglich des Profilkörpers 421 erzielt.

Die Anhängekupplung 409 oder die Trägeranordnung 410 weist Stützteile 570 auf, die beispielsweise ähnlich wie die Stützteile 70 in Bezug auf die Trägeranordnung 10 jeweils in den Übergangsbereichen 24 zwischen dem Querträger 11 und den Seitenträgern 12 angeordnet sind. Die Stützteile 570 umfassen beispielsweise Befestigungsabschnitte 571, mit denen die Stützteile 570 an der Trägeranordnung 410 befestigt sind. Von den Befestigungsabschnitten 571 stehen nach längsaußen, d.h. seitlich vor die Seitenträger 12, Stützschenkel 572 vor, die sozusagen den Querträger 11 nach quer außen und/oder in Bezug auf dessen Längsachsrichtung L in Richtung der Seitenträger 12 oder über die Seitenträger 12 hinaus verlängern.

Die Befestigungsabschnitte 571 weisen einander gegenüberliegende Schenkel 573 auf, die von einem Grundkörper 577 eines jeweiligen Stützteils 570 abstehen. Die Schenkel 573 sind beispielsweise in der Art von Stützwänden oder Haltewänden oder Haltevorsprüngen ausgestaltet und begrenzen eine Aufnahme 578, in der die Trägeranordnung 10, insbesondere der Bogenabschnitte 16 sowie teilweise ein jeweiliger Seitenträger 12 sowie der Längsendbereich 23 des Querträgers 11 aufgenommen ist. Die Aufnahme 578 ist im Querschnitt beispielsweise U-förmig. Die Stützelemente 570 sind beispielsweise anhand einer Verschraubung mit der Trägeranordnung 10 verbunden. Beispielsweise sind Schrauben 576 durch entsprechende Durchstecköffnungen an den Schenkeln 573 durchgesteckt und in das Profil der Trägeranordnung 10 eingeschraubt. Ohne weiteres wäre aber auch eine Verklebung, Verschweißung, Vernietung oder auch eine Verrastung (jeweils einzelnen oder in Kombination miteinander) eines Stützteils 570 mit der Trägeranordnung 410 möglich. Diese Maßnahme ist ohne weiteres bei jedem Stützelement, welches an einer Trägeranordnung gemäß der Erfindung angeordnet wird, möglich.

Nun wäre es denkbar, den Grundkörper 577 sozusagen in einem Block, beispielsweise aus Schaumstoff oder dergleichen herzustellen, sodass er eine gewisse Nachgiebigkeit aufweist, dennoch den Querträger 11 sozusagen verlängert.

Vorliegend ist jedoch ein Konzept mit einer Verrippung gewählt. Eine Rippenstruktur 580 ist beispielsweise zwischen einer Frontwand 579, die im am Kraftfahrzeug 90 montierten Zustand der Trägeranordnung 410 im Wesentlichen vertikal verläuft, sowie ebenfalls vertikal orientierten Seitenwänden 574, die sich von den Seitenträgern 12 weg in Richtung der Stützschenkel 572 erstrecken, und die Seitenwände 574 und die Frontwand 579 verbindenden Wandabschnitten 575 sowie einer in der Zeichnung nicht sichtbaren Bodenwand der Aufnahme 578 angeordnet. Die Wandabschnitte 575 sind beispielsweise quer außen an den Stützteilen 570 vorgesehen. Die Wandabschnitte 575 begrenzen oder sind sozusagen die freien Endbereiche der Stützschenkel 572.

Die Rippenstruktur 580 weist im Bereich der Frontwand 579 Rippen 581 auf, welche relativ große Abstände zueinander haben oder relativ große Kammer-Querschnitte begrenzen. Im Bereich der Seitenträger 12 hingegen ist die Rippenstruktur 580 etwas enger strukturiert und weist näher beieinander liegende oder kleinere Abstände zueinander aufweisende Rippen 582 auf.

Man erkennt in Figur 20, dass die Stützteile 570 ohne weiteres auch bei einer Anhängekupplung 509 bzw. deren Trägeranordnung 10 applizierbar ist, welche beispielsweise den Halter 40 entsprechend dem in Figur 1 und 2 dargestellten Konzept aufweist.

Die Rippenstruktur 580 ist bei den Stützteilen 570 so orientiert, dass nach oben und unten (in Gebrauchslage) offene Kammern dargestellt sind. Diese könnten ohne weiteres durch eine Deckwand und/oder eine Bodenwand oberseitig oder unterseitig verschlossen sein. Weiterhin sind die Rippen 581, 582 in Gebrauchslage vertikal orientiert. Eine horizontale Orientierung einer Rippenstruktur ist im Ausführungsbeispiel gemäß Figur 21 dargestellt.

Bei einer Anhängekupplung 609, die beispielsweise ebenfalls den Halter 40 aufweist (vergleiche Figur 1) sind Stützteile 670 vorgesehen, die grundsätzlich ähnlich aufgebaut sind wie die Stützteile 570. Beispielsweise haben sie Befestigungsabschnitte 671 zur Befestigung an der Trägeranordnung 10. An den Befestigungsabschnitten 671 sind einander gegenüberliegende Schenkel 673 vorgesehen, die eine Aufnahme 678 begrenzen, die ähnlich wie die Aufnahme 578 jeweils zumindest den Krümmungsabschnitt 14 der Trägeranordnung 10, insbesondere formschlüssig, aufnehmen. Anhand einer Verschraubung 676 sind die Stützteile 670 an der Trägeranordnung 10 befestigt, hier verschraubt, wobei wie gesagt eine Verklebung und/oder Verschweißung und/oder eine Verrastung ohne weiteres auch denkbar ist. Vor die Befestigungsabschnitte 671 stehen Stützschenkel 672 längsaußen vor die Seitenträger 12 vor, sodass der Querträger 11 sozusagen seitlich verlängert ist.

Grundkörper 677 der Stützteile 670 weisen eine Verrippung 680 auf, die sich zwischen einer Deckwand und einer Bodenwand 679 eines jeweiligen Grundkörpers 677 erstreckt. Rippen 681 der Rippenstruktur 680 erstrecken sich in Gebrauchslage der Anhängekupplung 609 im Wesentlichen horizontal, sodass beispielsweise horizontal verlaufende Kammern zwischen den Rippen 681 ausgebildet sind. Die Rippen 681 erstrecken sich von einer Frontseite 683 eines jeweiligen Stützteils 670 nach hinten bis zu einer in der Zeichnung nicht sichtbaren Rückwand 674, die ihrerseits wiederum bis zu den Seitenträgern 12 reicht. Mithin sind also die durch die Rippen 681 begrenzten Kammern in Fahrtrichtung nach vorn vorzugsweise verschlossen. Weiterhin ist die Rippenstruktur 680 an den freien Endbereichen der Stützschenkel 672 durch Wandabschnitte 675 begrenzt. Die Wandabschnitte 675 gehen in die in der Zeichnung nicht sichtbare Rückwand 674 über.

Die Rippenstruktur 680 weist beispielsweise etwa rautenförmige Kammern auf. Die Rippenstruktur 580 hingegen sieht beispielsweise etwa hexagonale Kammern vor. Dies ist nur als Beispiel zu verstehen, d.h. es sind auch Kombinationen möglich, bei denen beispielsweise unterschiedliche Rippengeometrien, zum Beispiel hexagonale Kammern, rautenförmige Kammern und dergleichen, an ein und demselben Stützteile vorgesehen sein können.

Die Stützteile 570, 670 bestehen beispielsweise aus einem zumindest partiell nachgiebigen Kunststoff. Sie können aber auch aus einem Hartkunststoff oder Metall oder dergleichen sein, das heißt an sich nicht nachgiebig, wobei die Rippenstrukturen 580, 680 im Falle eines Aufpralls deformierbar und somit nachgiebig sind.

## Patentansprüche

1. Anhängekupplung für ein Kraftfahrzeug (90) mit einer Trägeranordnung (10), die einen zur Anordnung an einem Heck (91) eines Kraftfahrzeugs (90) vorgesehenen Querträger (11) und einen an dem Querträger (11) gehaltenen Halter (40; 140) zum Halten eines Kupplungsarms (80) der Anhängekupplung (9; 109) aufweist, wobei der Kupplungsarm (80) zur Befestigung eines Anhängers (95) oder eines Lastenträgers vorgesehen ist, wobei der Querträger (11) eine Durchtrittsöffnung (43) des Halters (40; 140) durchdringt und der Halter (40; 140) an einem Halterbereich (25) des Querträgers (11) formschlüssig gehalten ist, und wobei der Halter (40; 140) ein Aufnahmeteil (45; 145), das eine die Durchtrittsöffnung (43) zumindest teilweise bereitstellende Querträgeraufnahme (44) für den Querträger (11) aufweist, und ein mit dem Aufnahmeteil (45; 145) formschlüssig verbundenes Schließteil (46; 146) aufweist, das die Querträgeraufnahme (44) ganz oder teilweise verschließt, sodass das Aufnahmeteil (45; 145) und das Schließteil (46; 146) die Durchtrittsöffnung (43) begrenzen, **dadurch gekennzeichnet, dass** das Schließteil (46; 146) an dem Aufnahmeteil (45; 145) durch eine Umformung, insbesondere einer Innenumformung, des Querträgers (11) im Bereich des Halters (40; 140) fixiert ist.

2. Anhängekupplung nach Anspruch 1, **dadurch gekennzeichnet, dass** der Querträger (11) zumindest im Bereich des Halters (40; 140) durch eine Innenumformung, insbesondere eine Innenhochdruckumformung, und/oder eine auf seinen Außenumfang einwirkende Umformung in Formschluss mit dem Halter (40; 140) gebracht ist.

3. Anhängekupplung nach Anspruch 1 oder 2, **dadurch gekennzeichnet, dass** der Halter (40; 140) mindestens eine Verschiebesicherungskontur (59) und/oder Verdrehsicherungskontur aufweist, an der eine durch die Umformung gebildete Formschlusskontur des Querträgers (11) formschlüssig anliegt.

4. Anhängekupplung nach Anspruch 3, **dadurch gekennzeichnet, dass** die mindestens eine Verschiebesicherungskontur (59) und/oder die mindestens eine Verdrehsicherungskontur mindestens eine Querkontur, insbesondere eine Seitenkontur, quer zu der Längsrichtung (L) des Querträgers (11) und/oder einen Vorsprung oder eine Vertiefung oder eine Aussparung, insbesondere in Gestalt einer Bohrung oder eines Lochs, an einem Innenumfang der Durchtrittsöffnung (43) und/oder mindestens ein Befestigungselement, insbesondere einen Bolzen, zur Befestigung eines Anbauteils (334), insbesondere eines Haltekörpers (342) für den Kupplungsarm (80), umfasst und/oder dass die mindestens eine Verdrehsicherungskontur durch eine geometrische Ausgestaltung einer Innenkontur der Durchtrittsöffnung (43) des Halters (40; 140) gebildet ist, gegenüber der der Halterbereich (25) des Querträgers (11) unverdrehbar ist.

5. Anhängekupplung nach einem der vorhergehenden Ansprüche, **dadurch gekennzeichnet, dass** an dem Schließteil (46) mindestens eine Anlagefläche (57a) schräg oder quer zu einer Steckrichtung, in welcher das Schließteil (46) an das Aufnahmeteil oder in das Aufnahmeteil (45) einsteckbar ist, aufweist, an welcher eine Stützkontur oder Anlagekontur des Querträgers (11) anliegt, die durch die Umformung des Querträgers (11) gebildet ist und/oder dass die Trägeranordnung (10) mindestens einen integral oder einstückig mit dem Querträger (11) verbundenen Seitenträger (12) umfasst.

6. Anhängekupplung nach einem der vorhergehenden Ansprüche **dadurch gekennzeichnet, dass** das Aufnahmeteil (45; 145) mindestens ein Widerlager (50; 150) für das Schließteil (46; 146) aufweist, an dem sich das Schließteil (46; 146) quer zu einer Einsteckrichtung (E) des Querträgers (11) in die Querträgeraufnahme (44) abstützt.

7. Anhängekupplung nach Anspruch 6, **dadurch gekennzeichnet, dass** das mindestens eine Widerlager (50; 150) mindestens eine Einstecköffnung für einen Steckabschnitt des Schließteils (46; 146) und/oder eine Verzahnung und/oder einen Zapfenvorsprung und/oder eine Zapfenaufnahme und/oder einen Hakenvorsprung oder eine Hakenaufnahme umfasst und/oder dass an die Querträgeraufnahme (44) seitlich begrenzenden Seitenschenkeln des Aufnahmeteils (45; 145) jeweils mindestens ein Widerlager (50; 150) vorgesehen ist, an dem sich das Schließteil (46; 146) abstützt.

8. Anhängekupplung nach einem der vorhergehenden Ansprüche, **dadurch gekennzeichnet, dass** das Schließteil (46; 146) und/oder das Aufnahmeteil (45; 145) durch eine Umformung und/oder eine Verschraubung und/oder eine Verklebung vor oder nach der Umformung des Querträgers (11) miteinander verbunden sind und/oder dass das Schließteil (46; 146) und das Aufnahmeteil (45; 145) anhand mindestens einer Verzahnung miteinander formschlüssig verbunden sind, wobei zweckmäßigerweise vorgesehen ist, dass die mindestens eine Verzahnung eine Steckrichtung (S) oder Längserstreckungsrichtung aufweist, die nicht parallel zu einer Einsteckrichtung (E) verläuft, entlang derer der Querträger (11) oder dessen Rohling in die Querträgeraufnahme (44) des Halters (40; 140) einzustecken ist.

9. Anhängekupplung nach einem der vorhergehenden Ansprüche, **dadurch gekennzeichnet, dass** an mindestens einem Längsendbereich (23), insbesondere an einander entgegengesetzten Längsendbereichen (23), des Querträgers (11) oder mindestens einem Übergangsbereich (24) des Querträgers (11) zu Seitenträgern (12) der Trägeranordnung (10) mindestens ein Stützelement (70) für einen Stoßfänger (94) des Kraftfahrzeugs (90) und/oder als Aufpralldämpfer vorgesehen ist.

10. Anhängekupplung nach Anspruch 9, **dadurch gekennzeichnet, dass** das mindestens eine Stützelement (70) eine Aufnahme (78) für die Trägeranordnung (10), insbesondere den Querträger (11) aufweist und/oder anhand einer Verschraubung oder Vernietung mit der Trägeranordnung (10) verbunden ist und/oder mindestens einen frei vor den Querträger (11) vorstehenden Stützschenkel (72) und/oder mindestens ein Dämpferteil oder Stützteil für einen Stoßfänger (94) des Kraftfahrzeugs aufweist und/oder dass das mindestens eine Stützelement (70) einen Bestandteil einer Anordnung von mindestens zwei in einem Abstand zueinander angeordneten Stützelementen (70) bildet, von denen jeweils eines an einem Längsendbereich (43) des Querträgers (11) angeordnet ist, und/oder dass das mindestens eine Stützelement (70) aus Kunststoff besteht, und/oder dass das mindestens eine Stützelement (70) eine Rippenstruktur aufweist und/oder dass das mindestens eine Stützelement (70) in Längserstreckungsrichtung des Querträgers (11) vor den Querträger (11) seitlich vorsteht.

11. Anhängekupplung nach einem der vorhergehenden Ansprüche, **dadurch gekennzeichnet, dass** die Trägeranordnung (10) zumindest partiell, insbesondere im Bereich von Seitenträgern (12), eine an das Kraftfahrzeug (90) angepasste Außenumfangskontur aufweist.

12. Anhängekupplung nach einem der vorhergehenden Ansprüche, **dadurch gekennzeichnet, dass** die Trägeranordnung (10) Seitenträger (12) aufweist, die im Bereich ihrer freien Enden im Rahmen der Umformung eine an das Kraftfahrzeug (90) angepasste Außenumfangskontur, insbesondere eine Verjüngung, aufweisen.

13. Anhängekupplung nach einem der vorhergehenden Ansprüche, **dadurch gekennzeichnet, dass** der Halter (340, 440) mindestens einen Bolzen (370) umfasst, der in einer Steckachsrichtung (S) in eine Durchtrittsöffnung (475) des Halters (340, 440), insbesondere des Aufnahmeteils (345, 445), eingesteckt ist und mit einem insbesondere eine Verschiebesicherungskontur bildenden Bolzenkopf (371) an dem Halter, insbesondere dem Aufnahmeteil (345, 445), neben der Durchtrittsöffnung (375, 475) abgestützt ist, dass ein Bolzenschaft (372) des mindestens einen Bolzens (370) zur Befestigung eines Anbauteils (334), insbesondere eines Haltekörpers (342) für den Kupplungsarm (80), in der Steckachsrichtung (SX) vor den Halter, insbesondere das Aufnahmeteil, vorsteht und der Bolzenkopf (371) durch eine Umformungspartie (377), insbesondere durch eine Umformung, des Querträgers (11), im Bereich des Halters (340, 440), entgegen der Steckachsrichtung (SX) abgestützt ist und/oder der mindestens eine Bolzen (370) anhand mindestens einer Verdrehsicherungskontur (374, 476) an der Durchtrittsöffnung (375, 475) verdrehsicher gehalten ist.

14. Verfahren zur Herstellung einer für ein Kraftfahrzeug (90) vorgesehenen Anhängekupplung (9; 109) mit einer Trägeranordnung (10), die einen zur Anordnung an einem Heck (91) eines Kraftfahrzeugs (90) vorgesehenen Querträger (11) und einen an dem Querträger (11) gehaltenen Halter zum Halten eines Kupplungsarms (80) der Anhängekupplung (9; 109) aufweist, wobei der Kupplungsarm (80) zur Befestigung eines Anhängers (95) oder eines Lastenträgers vorgesehen ist, wobei der Querträger (11) eine Durchtrittsöffnung (43) des Halters (40; 140) durchdringt und der Halter (40; 140) an einem Halterbereich (25) des Querträgers (11) formschlüssig gehalten ist, wobei das Verfahren vorsieht:
- Anbringen eines Aufnahmeteils (45; 145) des Halters (40; 140) an einem Rohling des Querträgers (11), so dass der Querträger (11) in einer Querträgeraufnahme (44) des Aufnahmeteils (45; 145) aufgenommen ist, wobei die Querträgeraufnahme (44) zumindest einen Teil der Durchtrittsöffnung (43) bereitstellt,
- Verschließen der Querträgeraufnahme (44) des Aufnahmeteils (45; 145) durch ein Schließteil (46; 146), sodass die Durchtrittsöffnung (43) für den Querträger (11) ganz oder zumindest teilweise verschlossen ist,
**gekennzeichnet durch**:
- Umformen des Querträgers (11) im Bereich des Halters (40; 140) zur Fixierung des Halters (40; 140) am Querträger (11).

15. Verfahren nach Anspruch 14, **dadurch gekennzeichnet, dass** der Rohling des Querträgers (11) vordem Anbringen des Halters (40; 140) derart umgeformt ist, insbesondere dass er den Querträger (11) und mindestens einen von dem Querträger (11) winkelig abstehenden Seitenträger (12) aufweist, dass er mindestens einen Krümmungsabschnitt aufweist, der durch die von dem Aufnahmeteil (45; 145) und dem Schließteil (46; 146) begrenzte Durchtrittsöffnung (43) nicht durchsteckbar ist.

## Claims

1. Trailer coupling for a motor vehicle (90) with a support assembly (10) which has a cross-member (11) provided for fitting to a rear section (91) of a motor vehicle (90) and a holder (40; 140) held on the cross-member (11) for holding a coupling arm (80) of the trailer coupling (9; 109), wherein the coupling arm (80) is provided for attaching a trailer (95) or a load carrier, wherein the cross-member (11) penetrates a through hole (43) of the holder (40; 140) and the holder (40; 140) is held positively on a holder section (25) of the cross-member (11), and wherein the holder (40; 140) has a locating part (45; 145) which has a cross-member location (44) for the cross-member (11) providing at least partly the through hole (43), and a closing part (46; 146) connected positively to the locating part (45; 145) and wholly or partly closing the cross-member location (44), so that the locating part (45; 145) and the closing part (46; 146) bound the through hole (43), **characterised in that** the closing part (46; 146) is fixed to the locating part (45; 145) by forming, in particular internal forming, of the cross-member (11) in the area of the holder (40; 140).

2. Trailer coupling according to claim 1, **characterised in that** the cross-member (11), at least in the area of the holder (40; 140), is brought into positive contact with the holder (40; 140) by internal forming, in particular internal high-pressure forming, and/or forming acting on its outer periphery.

3. Trailer coupling according to claim 1 or 2, **characterised in that** the holder (40; 140) has at least one shift-lock contour (59) and/or twist-lock contour, with which a form-fitting contour of the cross-member (11) made by forming makes positive contact.

4. Trailer coupling according to claim 3, **characterised in that** the shift-lock contour or contours (59) and/or the twist-lock contour or contours include at least one lateral contour, in particular a side contour, transverse to the longitudinal direction (L) of the cross-member (11) and/or a projection or a recess or an opening, in particular in the form of a drilled hole or a hole, at an inner periphery of the through hole (43), and/or at least one mounting element, in particular a bolt, for fixing an attachment (334), in particular a holding body (342) for the coupling arm (80), and/or that the twist-lock contour or contours is or are formed by a geometrical configuration of an internal contour of the through hole (43) of the holder (40; 140), relative to which the holder section (25) of the cross-member (11) is non-rotatable.

5. Trailer coupling according to any of the preceding claims, **characterised in that** it has on the closing part (46; 146) at least one contact surface (57a) at an angle or transverse to an insertion direction in which the closing part (46; 146) may be inserted on to the locating part or into the locating part (45), against which there fits a support contour or locating contour of the cross-member (11) which is formed by the forming of the cross-member (11), and/or that the support assembly (10) includes a side member (12) integral with or joined in one piece to the cross-member (11).

6. Trailer coupling according to any of the preceding claims, **characterised in that** the closing part (46; 146) has at least one abutment (50; 150) for the closing part (46; 146), on which the closing part (46; 146) rests transversely to a direction of insertion (E) of the cross-member (11) into the cross-member location (44).

7. Trailer coupling according to claim 6, **characterised in that** the abutment or abutments (50; 150) includes or include at least one insertion opening for an insertion section of the closing part (46; 146) and/or a tooth arrangement and/or a pin projection and/or a pin location and/or a hook projection or a hook location, and/or that on side legs of the locating part (45; 145) bounding the sides of the cross-member location (44), in each case at least one abutment (50; 150) is provided, on which the closing part (46; 146) rests.

8. Trailer coupling according to any of the preceding claims, **characterised in that** the closing part (46; 146) and/or the locating part (45; 145) are joined to one another by forming and/or a screw connection and/or bonding before or after forming of the cross-member (11) and/or that the closing part (46; 146) and the locating part (45; 145) are connected positively to one another with the aid of at least one tooth arrangement, wherein expediently it is provided that the tooth arrangement or arrangements has or have an insertion direction (S) or direction of longitudinal extent which does not run parallel to a direction of insertion (E) along which the cross-member (11) or its blank is to be inserted into the cross-member location (44) of the holder (40; 140).

9. Trailer coupling according to any of the preceding claims, **characterised in that**, on at least one longitudinal end section (23), in particular on opposite longitudinal end sections (23) of the cross-member (11) or at least one transition zone (24) of the cross-member (11) to side members (12) of the support assembly (10), there is provided at least one support element (70) for a bumper (94) of the motor vehicle (90) and/or as impact absorber.

10. Trailer coupling according to claim 9, **characterised in that** the support element or elements (70) has or have a seating (78) for the support assembly (10), in particular the cross-member (11) and/or is or are connected to the support assembly (10) with the aid of a screw connection or riveting and/or has or have a support leg (72) protruding freely from the cross-member (11) and/or at least one damper part or support part for a bumper (94) of the motor vehicle and/or that the support element or elements (70) forms or form part of an assembly of at least two support elements (70) spaced apart from one another, of which in each case one is located at a longitudinal end section (23) of the cross-member (11), and/or that the support element or elements (70) is or are made of plastic, and/or that the support element or elements (70) has or have a rib structure, and/or that the support element or elements (70) protrudes or protrude from the cross-member (11) in the direction of longitudinal extent of the cross-member (11).

11. Trailer coupling according to any of the preceding claims, **characterised in that** the support assembly (10) has at least partly, in particular in the area of side members (12), an outer peripheral contour adapted to the motor vehicle (90).

12. Trailer coupling according to any of the preceding claims, **characterised in that** the support assembly (10) has side members (12) which, in the area of their free ends, in the context of forming, have an outer peripheral contour adapted to the motor vehicle (90), in particular a tapering.

13. Trailer coupling according to any of the preceding claims, **characterised in that** the holder (340, 440) includes at least one bolt (370) which is inserted in an insertion axial direction (SX) into a through hole (475) of the holder (340, 440), in particular the locating part (345, 445) and is supported on the holder, in particular the locating part (345, 445), next to the through hole (375, 475), by a bolt head (371) forming in particular a shift-lock contour (59), that a bolt shank (372) of the bolt or bolts (370) protrudes from the holder, in particular the locating part, in the insertion axial direction (SX) for attaching an attachment (334), in particular a holding body (342) for the coupling arm (80), and the bolt head (371) is supported in the area of the holder (340, 440) against the insertion axial direction (SX) by a forming section (377), in particular by a forming of the cross-member (11), and/or the bolt or bolts (370) is or are held non-rotatably with the aid of at least one twist-lock contour (374, 476) on the through hole (375, 475).

14. Method for the production of a trailer coupling (9; 109) provided for a motor vehicle (90) with a support assembly (10) which has a cross-member (11) provided for fitting to a rear section (91) of a motor vehicle (90) and a holder held on the cross-member (11) for holding a coupling arm (80) of the trailer coupling (9; 109), wherein the coupling arm (80) is provided for attaching a trailer (95) or a load carrier, wherein the cross-member (11) penetrates a through hole (43) of the holder (40; 140) and the holder (40; 140) is held positively on a holder section (25) of the cross-member (11), wherein the method provides:
- attachment of a locating part (45; 145) of the holder (40; 140) to a blank of the cross-member (11), so that the cross-member (11) is held in a cross-member location (44) of the locating part (45; 145), wherein the cross-member location (44) provides at least a part of the through hole (43)
- closing of the cross-member location (44) of the locating part (45; 145) by a closing part (46; 146), so that the through hole (43) for the cross-member (11) is wholly or at least partly closed
**characterised by**:
- forming of the cross-member (11) in the area of the holder (40; 140), for fixing the holder (40; 140) to the cross-member (11).

15. Method according to claim 14, **characterised in that** the blank of the cross-member (11) is so formed before attachment of the holder (40; 140), in particular that it has the cross-member (11) and at least one side member (12) protruding at an angle from the cross-member (11), that it has at least one curved section which is unable to pass through the through hole (43) bounded by the locating part (45; 145) and the closing part (46; 146).

## Revendications

1. Attelage de remorque pour un véhicule automobile (90) avec un agencement de support (10), qui présente une traverse (11) prévue pour l'agencement à l'arrière (91) d'un véhicule automobile (90) et un dispositif de maintien (40 ; 140) maintenu au niveau de la traverse (11) pour le maintien d'un bras d'attelage (80) de l'attelage de remorque (9 ; 109), dans lequel le bras d'attelage (80) est prévu pour la fixation d'une remorque (95) ou d'un porte-charge, dans lequel la traverse (11) pénètre dans une ouverture de passage (43) du dispositif de maintien (40 ; 140) et le dispositif de maintien (40 ; 140) est maintenu par complémentarité de forme au niveau d'une zone de dispositif de maintien (25) de la traverse (11), et dans lequel le dispositif de maintien (40 ; 140) présente une pièce de réception (45 ; 145), qui présente un logement de traverse (44) mettant à disposition au moins en partie l'ouverture de passage (43) pour la traverse (11), et présente une pièce de fermeture (46 ; 146), reliée par complémentarité de forme à la pièce de réception (45 ; 145), qui ferme entièrement ou partiellement le logement de traverse (44), de sorte que la pièce de réception (45 ; 145) et la pièce de fermeture (46 ; 146) délimitent l'ouverture de passage (43), **caractérisé en ce que** la pièce de fermeture (46 ; 146) est fixée au niveau de la pièce de réception (45 ; 145) par une déformation, en particulier une déformation intérieure, de la traverse (11) dans la zone du dispositif de maintien (40 ; 140).

2. Attelage de remorque selon la revendication 1, **caractérisé en ce que** la traverse (11) est amenée, au moins dans la zone du dispositif de maintien (40 ; 140) par une déformation intérieure, en particulier une déformation à haute pression intérieure, et/ou une déformation agissant sur sa circonférence extérieure, en complémentarité de forme avec le dispositif de maintien (40 ; 140).

3. Attelage de remorque selon la revendication 1 ou 2, **caractérisé en ce que** le dispositif de maintien (40 ; 140) présente au moins un contour de blocage de déplacement (59) et/ou contour de blocage de torsion, sur lequel un contour de complémentarité de forme de la traverse (11) formé par la déformation s'applique par complémentarité de forme.

4. Attelage de remorque selon la revendication 3, **caractérisé en ce que** l'au moins un contour de blocage de déplacement (59) et/ou l'au moins un contour de blocage de torsion comprend au moins un contour transversal, en particulier un contour latéral, transversal à la direction longitudinale (L) de la traverse (11) et/ou une saillie ou un évidement ou une encoche, en particulier sous la forme d'un perçage ou d'un trou, au niveau d'une circonférence intérieure de l'ouverture de passage (43) et/ou au moins un élément de fixation, en particulier un boulon, pour la fixation d'une pièce rapportée (334), en particulier d'un corps de retenue (342) pour le bras d'attelage (80), et/ou que l'au moins un contour de blocage de torsion est formé par une configuration géométrique d'un contour intérieur de l'ouverture de passage (43) du dispositif de maintien (40 ; 140), par rapport auquel la zone de dispositif de maintien (25) de la traverse (11) est résistante à la torsion.

5. Attelage de remorque selon l'une quelconque des revendications précédentes, **caractérisé en ce qu'**au niveau de la pièce de fermeture (46), au moins une surface d'application (57a) présente obliquement ou transversalement à une direction d'enfichage, dans laquelle la pièce de fermeture (46) peut être enfichée au niveau de la pièce de réception ou dans la pièce de réception (45), sur laquelle un contour d'appui ou contour d'application de la traverse (11) s'applique, qui est formé par la déformation de la traverse (11) et/ou que l'agencement de support (10) comprend au moins un support latéral (12) relié intégralement ou d'un seul tenant à la traverse (11).

6. Attelage de remorque selon l'une quelconque des revendications précédentes, **caractérisé en ce que** la pièce de réception (45 ; 145) présente au moins une butée (50 ; 150) pour la pièce de fermeture (46 ; 146), sur laquelle la pièce de fermeture (46 ; 146) s'appuie transversalement à une direction d'enfichage (E) de la traverse (11) dans le logement de traverse (44).

7. Attelage de remorque selon la revendication 6, **caractérisé en ce que** l'au moins une butée (50 ; 150) comprend au moins une ouverture d'enfichage pour une section d'enfichage de la pièce de fermeture (46 ; 146) et/ou une denture et/ou une saillie de tenon et/ou un logement de tenon et/ou une saillie de crochet ou un logement de crochet et/ou que respectivement au moins une butée (50 ; 150), sur laquelle la pièce de fermeture (46 ; 146) s'appuie, est prévue au niveau de branches latérales de la pièce de réception (45 ; 145) délimitant latéralement le logement de traverse (44).

8. Attelage de remorque selon l'une quelconque des revendications précédentes, **caractérisé en ce que** la pièce de fermeture (46 ; 146) et/ou la pièce de réception (45 ; 145) sont reliées l'une à l'autre par une déformation et/ou un vissage et/ou un collage avant ou après la déformation de la traverse (11) et/ou que la pièce de fermeture (46 ; 146) et la pièce de réception (45 ; 145) sont reliées l'une à l'autre par complémentarité de forme à l'aide d'au moins une denture, dans lequel il est prévu de manière appropriée que l'au moins une denture présente une direction d'enfichage (S) ou une direction d'extension longitudinale, qui s'étend de manière non parallèle à une direction d'enfichage (E), le long de laquelle la traverse (11) ou son ébauche doit être enfichée dans le logement de traverse (44) du dispositif de maintien (40 ; 140).

9. Attelage de remorque selon l'une quelconque des revendications précédentes, **caractérisé en ce qu'**au niveau d'au moins une zone d'extrémité longitudinale (23), en particulier au niveau de zones d'extrémité longitudinales opposées les unes aux autres (23), de la traverse (11) ou d'au moins une zone de transition (24) de la traverse (11) vers des supports latéraux (12) de l'agencement de support (10) est prévu au moins un élément d'appui (70) pour un pare-chocs (94) du véhicule automobile (90) et/ou en tant qu'amortisseur de chocs.

10. Attelage de remorque selon la revendication 9, **caractérisé en ce que** l'au moins un élément d'appui (70) présente un logement (78) pour l'agencement de support (10), en particulier la traverse (11) et/ou est relié au agencement de support (10) à l'aide d'un vissage ou rivetage et/ou présente au moins une branche d'appui (72) faisant saillie librement devant la traverse (11) et/ou au moins une pièce d'amortisseur ou pièce d'appui pour un pare-chocs (94) du véhicule automobile et/ou que l'au moins un élément d'appui (70) fait partie intégrante d'un agencement d'au moins deux éléments d'appui (70) agencés à une distance l'un de l'autre, dont respectivement un est agencé au niveau d'une zone d'extrémité longitudinale (43) de la traverse (11), et/ou que l'au moins un élément d'appui (70) est constitué de plastique et/ou que l'au moins un élément d'appui (70) présente une structure nervurée et/ou que l'au moins un élément d'appui (70) fait saillie dans la direction d'extension longitudinale de la traverse (11) latéralement devant la traverse (11).

11. Attelage de remorque selon l'une quelconque des revendications précédentes, **caractérisé en ce que** l'agencement de support (10) présente au moins partiellement, en particulier dans la zone de supports latéraux (12), un contour circonférentiel extérieur adapté au véhicule automobile (90).

12. Attelage de remorque selon l'une quelconque des revendications précédentes, **caractérisé en ce que** l'agencement de support (10) présente des supports latéraux (12), qui présentent dans la zone de leurs extrémités libres dans le cadre de la déformation un contour circonférentiel extérieur adapté au véhicule automobile (90), en particulier un amincissement.

13. Attelage de remorque selon l'une quelconque des revendications précédentes, **caractérisé en ce que** le dispositif de maintien (340, 440) comprend au moins un boulon (370), qui est enfiché dans une direction d'axe d'enfichage (S) dans une ouverture de passage (475) du dispositif de maintien (340, 440), en particulier de la pièce de réception (345, 445), et est soutenu avec une tête de boulon (371) formant en particulier un contour de blocage de déplacement au niveau du dispositif de maintien, en particulier de la pièce de réception (345, 445), à côté de l'ouverture de passage (375, 475), qu'une tige de boulon (372) de l'au moins un boulon (370) pour la fixation d'une pièce rapportée (334), en particulier d'un corps de retenue (342) pour le bras d'attelage (80), fait saillie dans la direction d'axe d'enfichage (SX) devant le dispositif de maintien, en particulier la pièce de réception, et la tête de boulon (371) est soutenue par une partie de déformation (377), en particulier par une déformation, de la traverse (11), dans la zone du dispositif de maintien (340, 440), dans la direction opposée à la direction d'axe d'enfichage (SX) et/ou l'au moins un boulon (370) est maintenu résistant à la torsion à l'aide d'au moins un contour de blocage de torsion (374, 476) au niveau de l'ouverture de passage (375, 475).

14. Procédé de fabrication d'un attelage de remorque (9 ; 109) prévu pour un véhicule automobile (90) avec un agencement de support (10), qui présente une traverse (11) prévue pour l'agencement à l'arrière (91) d'un véhicule automobile (90) et un dispositif de maintien maintenu au niveau de la traverse (11) pour le maintien d'un bras d'attelage (80) de l'attelage de remorque (9 ; 109), dans lequel le bras d'attelage (80) est prévu pour la fixation d'une remorque (95) ou d'un porte-charge, dans lequel la traverse (11) pénètre dans une ouverture de passage (43) du dispositif de maintien (40 ; 140) et le dispositif de maintien (40 ; 140) est maintenu par complémentarité de forme au niveau d'une zone de dispositif de maintien (25) de la traverse (11), dans lequel le procédé prévoit :
- le montage d'une pièce de réception (45 ; 145) du dispositif de maintien (40 ; 140) au niveau d'une ébauche de la traverse (11), de sorte que la traverse (11) est reçue dans un logement de traverse (44) de la pièce de réception (45 ; 145), dans lequel le logement de traverse (44) met à disposition au moins une partie de l'ouverture de passage (43),
- la fermeture du logement de traverse (44) de la pièce de réception (45 ; 145) par une pièce de fermeture (46 ; 146), de sorte que l'ouverture de passage (43) pour la traverse (11) est fermée entièrement ou au moins en partie,
**caractérisé par** :
- la déformation de la traverse (11) dans la zone du dispositif de maintien (40 ; 140) pour la fixation du dispositif de maintien (40 ; 140) au niveau de la traverse (11).

15. Procédé selon la revendication 14, **caractérisé en ce que** l'ébauche de la traverse (11) est déformée avant le montage du dispositif de maintien (40 ; 140) de sorte que, en particulier, il présente la traverse (11) et au moins un support latéral (12) dépassant angulairement de la traverse (11), qu'il présente au moins une section de courbure, qui ne peut pas passer à travers l'ouverture de passage (43) délimitée par la pièce de réception (45 ; 145) et la pièce de fermeture (46 ; 146).
